(19) Europäisches Patentamt
European Patent Office
Office européen des brevets

(11) **EP 4 749 455 A1**

(12) **EUROPEAN PATENT APPLICATION**

(43) Date of publication:
**27.05.2026 Bulletin 2026/22**

(21) Application number: **25209748.0**

(22) Date of filing: **20.10.2025**

(51) International Patent Classification (IPC):
**G06F 9/50** (2006.01)    **G06N 3/042** (2023.01)
**G06N 3/063** (2023.01)    **G06N 3/0495** (2023.01)

(52) Cooperative Patent Classification (CPC):
**G06N 3/063; G06F 9/5066; G06N 3/042;
G06N 3/0495**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **21.11.2024 US 202463723298 P
12.06.2025 US 202519236416**

(71) Applicant: **INTEL Corporation
Santa Clara, CA 95054 (US)**

(72) Inventors:
• **DAS, Arghadip
San Jose, CA, 95125 (US)**
• **GHOSH, Soumendu Kumar
Hillsboro, OR, 97124 (US)**
• **RAHA, Arnab
San Jose, CA, 95136 (US)**
• **KUNDU, Shamik
San Jose, CA, 95125 (US)**
• **MATHAIKUTTY, Deepak Abraham
Chandler, AZ, 85224 (US)**

(74) Representative: **Rummler, Felix
Maucher Jenkins
Seventh Floor Offices
Artillery House
11-19 Artillery Row
London SW1P 1RT (GB)**

(54) **GRAPH NEURAL NETWORK EXECUTION ON NEURAL PROCESSING UNIT**

(57)     Workloads for executing a graph neural network (GNN) may be divided among various processing units, such as a central processing unit (CPU) and a neural processing unit (NPU). The NPU may include a data processing unit (DPU) and a digital signal processor (DSP). The CPU may perform precomputation, model optimization, hardware optimization, and compilation. For example, the CPU may precompute a parameter matrix and use the parameter matrix as internal parameters of a GNN. The CPU may also perform node padding, approximation computation, or transfer of DSP operations to DPU to optimize the GNN. The CPU may also perform sparsity data compute and storage, vertical fusion of DSP operations and DPU operations, or data quantization to optimize performance of the NPU. The compiled GNN may be provided to the NPU, and the DPU and DSP may perform the operations in the compiled GNN to produce a prediction of the GNN.

FIG. 1

EP 4 749 455 A1

## Description

### Cross-Reference to Related Application

This application claims the benefit of U.S. Provisional Patent Application No. 63/723,298, filed November 21, 2024, and titled "ENABLING EXECUTION OF GRAPH NEURAL NETWORK ON NEURAL NETWORK ACCELERATOR," which is incorporated herein by reference in its entirety for all purposes.

### Technical Field

This disclosure relates generally to neural networks (also referred to as "deep neural networks" or "DNN"), and more specifically, graph neural network (GNN) execution on neural processing units (NPUs).

### Background

Neural networks (also referred to as "deep neural networks" or "DNNs") are used extensively for a variety of AI applications ranging from natural language processing to computer vision, speech recognition, and image processing due to their ability to achieve high accuracy. However, the high accuracy comes at the expense of significant computation cost. DNNs have extremely high computing demands as there can be a large number of operations as well as a large amount of data to read and write. Therefore, techniques to improve efficiency of DNNs are needed.

### Brief Description of the Drawings

Embodiments can be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 is a block diagram of an AI system, in accordance with various embodiments.
FIG. 2 illustrates a graph of an example GNN, in accordance with various embodiments.
FIG. 3 illustrates a graph of another example GNN, in accordance with various embodiments.
FIG. 4 illustrates a graph of yet another example GNN, in accordance with various embodiments.
FIG. 5 illustrates changes of an input graph over time, in accordance with various embodiments.
FIG. 6 illustrates a GNN execution flow, in accordance with various embodiments.
FIG. 7 illustrates GNN layer computation, in accordance with various embodiments.
FIG. 8 illustrates a flow for enabling a GNN on an NPU, in accordance with various embodiments.

FIG. 9 is a block diagram of an NPU, in accordance with various embodiments.
FIG. 10A illustrates graph convolutional network (GCN) execution based on static input graphs, in accordance with various embodiments.
FIG. 10B illustrates graph attention network (GAT) execution based on static input graphs, in accordance with various embodiments.
FIG. 10C illustrates graph sample and aggregation (GraphSAGE) execution based on static input graphs, in accordance with various embodiments.
FIG. 11 illustrates dynamic input graph support for GNNs via node padding, in accordance with various embodiments.
FIG. 12 illustrates GNN execution on an NPU based on node padding, in accordance with various embodiments.
FIG. 13 illustrates graph preprocessing on a central processing unit (CPU), in accordance with various embodiments.
FIG. 14 illustrates GAT execution with control-intensive operations on a data processing unit (DPU), in accordance with various embodiments.
FIG. 15 illustrates GraphSAGE execution with control-intensive operations on a DPU, in accordance with various embodiments.
FIG. 16 illustrates exploiting input graph sparsity for faster execution, in accordance with various embodiments.
FIG. 17 illustrates vertical fusion of operations in GNN execution, in accordance with various embodiments.
FIG. 18 is an NPU with integer and floating-point data paths, in accordance with various embodiments.
FIG. 19 illustrates an example sparse cell, in accordance with various embodiments.
FIG. 20 illustrates an example sparse cell array, in accordance with various embodiments.
FIG. 21 illustrates an example processing element (PE), in accordance with various embodiments.
FIG. 22 illustrates streamlined computation for a GNN with graph convolution (GraphConv) layers, in accordance with various embodiments.
FIG. 23 illustrates adjacency matrix storage for graph convolution layers, in accordance with various embodiments.
FIG. 24 illustrates an optimization of graph attention, in accordance with various embodiments.
FIG. 25 illustrates another optimization of graph attention, in accordance with various embodiments.
FIG. 26 is a flowchart of a method of GNN execution, in accordance with various embodiments.
FIG. 27 is a block diagram of an example computing device, in accordance with various embodiments.

### Detailed Description

The last decade has witnessed a rapid rise in AI

based data processing, particularly based on DNNs. DNNs are widely used in the domains of computer vision, speech recognition, image, and video processing mainly due to their ability to achieve beyond human-level accuracy. A DNN typically includes a sequence of layers. A DNN layer may include one or more operations, such as matrix multiplication, convolution, interpolation, layer normalization, batch normalization, SoftMax operation, pooling, elementwise operation, linear operation, nonlinear operation, and so on. These operations are referred to as deep learning operations or neural network operations.

Neural network operations may be tensor operations. Input or output data of neural network operations may be arranged in data structures called tensors. Taking a convolutional layer for example, the input tensors include an activation tensor (also referred to as "input feature map (IFM)" or "input activation tensor") including one or more activations (also referred to as "input elements") and a weight tensor. The weight tensor may be a kernel (a 2D weight tensor), a filter (a 3D weight tensor), or a group of filters (a 4D weight tensor). A convolution may be performed on the input activation tensor and weight tensor to compute an output activation tensor in the convolutional layer.

A tensor is a data structure having multiple elements across one or more dimensions. Examples of tensors include vector (which is one-dimensional (1D) tensor), matrix (which is two-dimensional (2D) tensor), three-dimensional (3D) tensors, four-dimensional (4D) tensors, and even higher dimensional tensors. A dimension of a tensor may correspond to an axis, e.g., an axis in a coordinate system. A dimension may be measured by the number of data points along the axis. The dimensions of a tensor may define the shape of the tensor. A DNN layer may receive one or more input tensors and compute an output tensor from the one or more input tensors. In some embodiments, a 3D tensor may have an X-dimension, a Y-dimension, and Z-dimension. The X-dimension of a tensor may be the horizontal dimension, the length of which may be the width of the tensor; the Y-dimension may be the vertical dimension, the length of which may be the height of the tensor; and the Z-dimension may be the channel dimension, the length of which may be the number of channels. The coordinates of the elements along a dimension may be integers in an inclusive range from 0 to (L - 1), where L is the length of the tensor in the dimension. For instance, the x coordinate of the first element in a row may be 0, the x coordinate of the second element in a row may be 1, and so on. Similarly, the y coordinate of the first element in a column may be 0, the y coordinate of the second element in a column may be 1, and so on. A 4D tensor may have a fourth dimension, which may indicate the number of batches in the operation.

GNNs are powerful tools for learning and reasoning over graph-structured data, excelling in applications like social network analysis, drug discovery, and recommendation systems. Unlike traditional neural networks such as Convolutional Neural Networks (CNNs) and Large Language Models (LLMs), GNNs are typically designed to capture complex relationships between entities by leveraging graph topology. This capability makes GNNs invaluable for tasks requiring an understanding of how nodes interact, positioning them as a major advancement in neural network architectures. The majority of GNNs are composed of three primary layer types: Graph Convolution, Graph Attention, and Sample and Aggregate (SAGE) layers.

Deploying GNNs on edge devices, such as laptops and client personal computers (PCs), can offer significant advantages, including real-time performance, privacy, and energy efficiency. For example, GNNs can enhance Retrieval-Augmented Generation (RAG) for LLMs in personal assistant software, enabling intelligent local reasoning without cloud dependency. GNNs are also well-suited for event-based vision tasks, where rapid processing can be crucial for real-time decision-making. Running GNNs locally can not only preserve user privacy but also reduces energy consumption and latency, essential for battery-powered devices. This demand for real-time processing emphasizes the need for a high-performance, power-efficient DNN accelerator (e.g., a NPU) to handle these tasks effectively.

However, deploying GNNs on resource-constrained client PCs presents several unique challenges, including irregular memory access patterns, dynamic computation workloads, and the need for effective parallelism, which hinder optimal performance and efficiency. Graphs are typically sparse, which can create challenges for efficient GNN execution, as the lack of connections results in irregular memory access patterns. This can cause memory latency and underutilization of computational resources, as accelerators like NPUs, optimized for dense data, struggle with the gaps in sparse structures. As a result, portions of hardware remain idle, wasting memory bandwidth and computational cycles, and leading to reduced performance. These issues highlight the need for advanced techniques to optimize data handling and improve hardware utilization with sparse graph inputs.

Also, input graphs are typically dynamic. GNNs are often employed to process time-varying, dynamic graphs where the structure-including nodes and edges-can frequently change. However, most NPUs are optimized for static models with fixed input shapes, resulting in considerable overhead when dealing with dynamic graphs. Each structural change, such as the addition of new nodes or edges in a knowledge graph, necessitates recompilation, incurring delays and resource inefficiencies. This challenge can be especially critical for applications like personal assistants, which depend on continuously updated, on-device knowledge graphs to deliver accurate, real-time information.

There can be high inference latency. GNNs typically involve control-heavy computations during the aggregation phase, especially in sparse graphs where nodes are not fully connected. This irregularity can result in inefficient memory access patterns, exacerbating latency issues. The dynamic memory footprint of GNNs often exceeds local static random-access memories (SRAM) capacity, necessitating data transfer to slower dynamic random-access memories (DRAM), further contributing to latency. For example, in event-based vision tasks that demand real-time processing, such delays can diminish responsiveness and overall reliability of the system. There can also be high energy consumption. Frequent background execution and high inference latency in GNNs lead to prolonged processing times, which increase energy consumption on client devices. Many applications, such as personal assistants and event-based vision systems, rely on continuous processing to remain responsive and deliver real-time insights. This constant background activity can raise energy demands, straining battery life and device performance, particularly critical for battery-powered devices where efficient energy use is essential.

NPUs, designed specifically for deep learning workloads, can offer significant performance advantages over traditional CPUs and graphics processing units (GPUs), enabling faster execution with lower power consumption. They can achieve high performance per watt, which is ideal for neural network applications requiring continuous background processing, such as those involving GNNs. This power efficiency and performance scalability make NPUs well-suited for handling GNN workloads, which often run in the background on client devices. However, mapping GNNs directly onto NPUs presents several challenges. The dynamic, time-varying nature of input graphs and inherent sparsity in GNN computations can make naive deployment on NPUs suboptimal compared to CPU- or GPU-only implementations. This highlights the need for a framework that leverages both GNN-specific properties and NPU capabilities through targeted optimization strategies.

Previous solutions for deploying GNNs on specialized hardware, such as NPUs, relied on general-purpose optimizations typically used for traditional neural networks. These approaches included fine-tuning models for specific hardware architectures, adjusting memory usage, and employing standard quantization techniques to reduce computation and memory overhead. For example, model mapping techniques are used to adapt GNNs to accelerators, though these often-required extensive retraining or hardware-specific code modifications to achieve acceptable performance. Additionally, solutions for enabling high-performance execution of GNNs on resource-constrained NPUs usually focus on optimizing dataflows and leveraging specialized hardware architectures. Techniques such as high-level synthesis (HLS) descriptions and dataflow architectures can optimize data access and PE utilization. Moreover, methods like degree-aware mixed-precision quantization and processing-in-memory (PIM) systems are explored to enhance the efficiency of GNN execution.

These methods suffer from several significant challenges. Retraining models for each hardware platform can be time-consuming and restrict the portability of pretrained GNNs across different devices. Additionally, the reliance on hardware-specific code makes it difficult to transfer optimizations to new architectures without significant rework. Memory and computation efficiency are often suboptimal, as standard compression techniques did not fully exploit the inherent sparsity in GNN data, resulting in wasted resources on accelerators. This inefficiency can be especially problematic for edge devices with limited computational power, leading to increased energy consumption and longer processing times. Furthermore, the irregular and input-dependent computation patterns of GNNs often results in inefficient acceleration on traditional CPUs, GPUs, and even specialized DNN accelerators like tensor processing units (TPUs). This inefficiency can cause higher inference latency compared to other types of neural networks, limiting their practical application to scenarios where inference could be precomputed offline. Moreover, the memory-intensive nature of GNNs poses a major bottleneck, as data movement between memory and processors become particularly challenging in resource-constrained environments.

Embodiments of the present disclosure may improve on at least some of the challenges and issues described above by providing an end-to-end methodology to optimize GNN deployment on NPUs. Minimal or even no hardware modifications would be needed. This end-to-end methodology is referred to as GraNNite hereinbelow. GraNNite can address the bottlenecks described above through a series of novel optimizations that enable efficient GNN execution on NPUs.

In various embodiments of the present disclosure, the optimization of GNN deployment on NPUs may encompass model-specific graph partitioning, dynamic node and edge updates through node padding, and the replacement of control-heavy digital signal processor (DSP) operations with equivalent data-parallel DPU operations. Additionally, techniques such as INT8 quantization, zero-value compression, and vertical fusion of operations may be used to minimize memory usage, computation costs, and latency, achieving significant performance improvements while maintaining model quality and requiring no hardware modifications.

For instance, workloads for executing a GNN may be divided among various types of processing units, such as a CPU and a NPU. The NPU may include a DPU and a DSP. The CPU may perform precomputation, model optimization, hardware optimization, and compilation for GNN. For example, the CPU may precompute a parameter matrix and use the parameter matrix as internal parameters of the GNN. The CPU may also perform node padding, approximation computation, or transfer of DSP operations to DPU to optimize the GNN. The CPU may also perform sparsity data compute and storage, vertical fusion of DSP operations and DPU operations, or data quantization to optimize performance of the NPU. The compiled GNN may be provided to the NPU, and the DPU and DSP may perform the operations in the compiled GNN to produce a prediction of the GNN.

This disclosure provides various techniques for optimizing GNN workloads on NPUs, significantly enhancing performance per watt-an essential metric for AI PCs. By reducing memory overhead, optimizing dynamic computation workloads, and leveraging hardware capabilities (such as sparsity and vertical fusion), GraNNite can significantly enhance GNN performance and resource efficiency. These improvements can make it feasible to seamlessly integrate GNNs into resource-constrained edge devices. This ensures rapid adoption of the proposed optimizations enabling immediate performance improvements. With GNNs powering on-device personal assistants, particularly for RAG in knowledge graph tasks, this solution can enable faster, energy-efficient, real-time responses. Additionally, GNNs such as AEGNN can play a vital role in event-driven vision tasks like automatic PC lock, theft detection, and privacy breach detection, making AI PCs smarter and more secure for end users.

For purposes of explanation, specific numbers, materials and configurations are set forth in order to provide a thorough understanding of the illustrative implementations. However, it can be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations are described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, device, or DNN accelerator that comprises a list of elements is not necessarily limited to only those elements but may include other elements not expressly listed or inherent to such method, process, device, or DNN accelerators. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

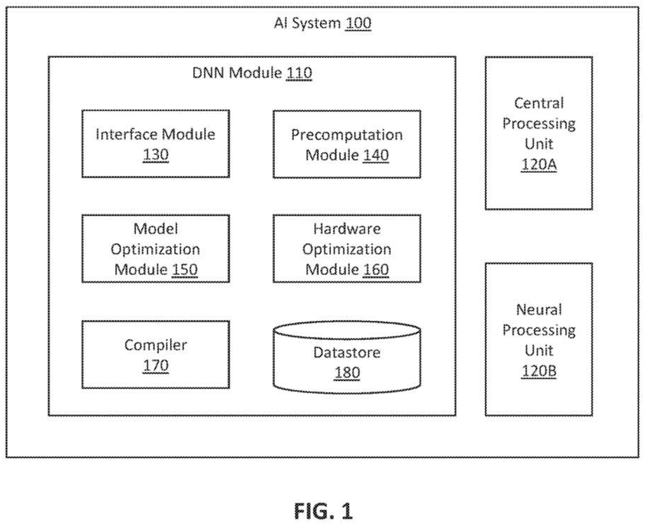

FIG. 1 is a block diagram of an AI system 100, in accordance with various embodiments. The AI system 100 may be a computing system. The AI system 100 includes a DNN module 110, a CPU 120A, and an NPU 120B. In other embodiments, alternative configurations, different or additional components may be included in the AI system 100. For instance, the AI system 100 may

include multiple CPUs or NPUs. Also, the AI system 100 may include other types of processing units, such as GPU. Further, functionality attributed to a component of the AI system 100 may be accomplished by a different component included in the AI system 100 or a different system. For instance, functionality attributed to the DNN module 110 may be accomplished by a module or system on the CPU 120A or NPU 120B.

The DNN module 110 facilitates deployment of DNNs, including deployment of GNNs. In some embodiments, the DNN module 110 may train and fine-tune DNNs. Additionally or alternatively, the DNN module 110 may receive a pretrained DNN from other modules or systems. The DNN module 110 may also deploy pretrained DNNs for use in AI applications (e.g., language processing, image classification, motion planning, etc.). In some embodiments, the DNN module 110 may facilitate deployment of the DNNs using the NPU 120B. For instance, the DNN module 110 may offload operations for DNN inference to the NPU 120B. DNN inference may be a process of executing a trained or fine-tuned DNN for performing an AI task.

As shown in FIG. 1, the DNN module 110 includes an interface module 130, a precomputation module 140, a model optimization module 150, a hardware optimization module 160, a compiler 170, and a datastore 180. In other embodiments, alternative configurations, different or additional components may be included in the DNN module 110. Further, functionality attributed to a component of the DNN module 110 may be accomplished by a different component included in the DNN module 110 or a different module or system. In some embodiments, the DNN module 110 may be executed on a computer system including the AI system 100. The DNN module 110 may run on an operation system of the computer system. The DNN module 110 may use a processing unit in the computer system, such as the CPU 120A or another CPU.

The interface module 130 facilitates communications of the DNN module 110 with other modules or systems. In some embodiments, the interface module 130 establishes communications between the DNN module 110 with an external database to receive datasets that can be used to train DNNs or deploy DNNs. In some embodiments, the interface module 130 may receive requests for deploying DNNs. The requests may be received from applications executed on the same device as the DNN module 110. For instance, the DNN module 110 may be executed on a computing device, and the requests may be received from applications (e.g., word processing applications, image processing applications, browser applications, etc.) running on an operation system of the computing device. The interface module 130 may forward a request or dataset (e.g., one or more input graphs) for deploying a DNN to the precomputation module 140 or other modules in the DNN module 110. In some embodiments, the interface module 130 may distribute trained or fine-tuned DNNs to other systems, e.g., computing devices configured to apply DNNs to perform AI tasks.

The precomputation module 140 may compute date to be used for deploying GNNs on the NPU 120B. In some embodiments, the precomputation module 140 may label the precomputed data for a GNN as internal parameters of the GNN even though the data is not generated by training the GNN. In some embodiments, the precomputation module 140 may receive an input graph of a GNN. The input graph may have nodes and edges. Nodes are also referred to as vertexes. An edge connects two or more nodes. The precomputation module 140 may also receive a parameter indicating the type of the GNN. For instance, the parameter may indicate whether the GNN is a GCN, GAT, or SAGE. The precomputation module 140 may generate a parameter matrix based on the input graph and the parameter.

In some embodiments, the precomputation module 140 may determine indices of the edges in the input graph. An edge index may indicate the nodes that the edge connects. Each node may have a node index. An edge index may include the indices of the nodes of the edge. The precomputation module 140 may select a parameter function based on the type of the GNN and input the edge indices into the parameter function to compute a parameter matrix. In some embodiments, the parameter matrix may have one or more dimensions corresponding to the number of edges in the input graph. In an example where the input graph has four edges, the spatial shapes of the parameter matrix may be $4 \times 4$. In an example where the GNN is a GAT, the parameter matrix may be an attention mask that can be used to compute attention scores. In an example where the GNN is a GCN, the parameter matrix may be a norm matrix that includes normalization factors. In an example where the GNN is a SAGE, the parameter matrix may be a sampled adjacency matrix.

In some embodiments, the precomputation module 140 also computes a node embedding matrix from the input graph. The node embedding matrix includes values indicating node embeddings. In an example, the node embedding matrix may have a height that equals the number of nodes in the input graph. The node embedding matrix may have a width that equals the number of features for each node. The width may be referred to as the feature dimension of the node embedding matrix. The precomputation module 140 may compute the node embedding matrix and parameter matrix offline, e.g., before the NPU 120B executes the GNN.

The model optimization module 150 optimizes GNNs to be deployed on the NPU 120B to improve the efficiency of GNN inference. In some embodiments, the model optimization module 150 may partition a GNN into control-heavy tasks and data-parallel tasks. Examples of control-heavy tasks may include tasks for generating control signals. Examples of data-parallel tasks may include neural network operations such as elementwise operations, MatMul operations, and so on. The model optimization module 150 may assign control-heavy tasks to the CPU 120A. In some embodiments, the model optimization module 150 may assign certain control-heavy tasks to a DSP in the NPU 120B. The model optimization module 150 may assign data-parallel tasks to the NPU 120B, e.g., to a DPU in the NPU 120B.

To determine which task to be performed by which processor, the model optimization module 150 may run one or more cost models. In some embodiments, the model optimization module 150 may select an optimal processing unit for a task in GNN inference based on comprehensive cost models and user preference. The mapping generated by the model optimization module 150 may be utilized to guide the GNN inference across the heterogeneous processing units during inference. The model optimization module 150 may leverage pre-developed cost models $C_{CPU}$, $C_{DSP}$, $C_{DPU}$ to identify the most efficient processing unit for each identified task.

In some embodiments, for each processing unit in the eligible list, the model optimization module 150 may estimate various types of costs of the processing unit performing a task. The costs may include a latency cost indicating an estimation of the latency caused by performing the task by the processing unit, an energy cost indicating an estimation of energy consumed by the processing unit for performing the task, a performance cost indicating an estimation of a performance of the processing unit for performing the task, and so on.

In some embodiments, the model optimization module 150 may input data indicating one or more model/task configurations into the cost models. The cost models may output estimates for latency $L_{IP}$, energy consumption $E_{IP}$, and performance per watt $P_{IP}$, which are pivotal metrics for decision-making. Examples of the configurations include input tensor shape, input data datatype, type of operation in the task, other types of configurations, or some combinations thereof. Along with cost models for specific types of processing units, the model optimization module 150 may use a pretrained DNN to predict the execution time, power consumption, and performance/watt of each task on each type of processor.

In some embodiments, the model optimization module 150 may select one cost type, e.g., based on a user selection. The model optimization module 150 may receive a user input indicating a preference of a user for a cost type and select the cost type based on the user input. The model optimization module 150 may further compare the costs of the selected type that are estimated for the processing units in the pruned eligible list and select a processing unit based on the comparison. For instance, the model optimization module 150 may select the processing unit that has the lowest cost or best performance. The model optimization module 150 may map the task to the selected processing unit.

In some embodiments, the user's preference may prioritize latency, throughput, or energy efficiency to device the optimal mapping. For running AI models, different users might have varying preferences depending on their specific needs, constraints, and objectives. Some AI applications may have high latency sensitivity. In an example, for real-time applications such as voice assistants or live translations, users may prioritize low latency to ensure a seamless and responsive user experience. In such cases, the preference would be to minimize the time it takes to compute each inference, possibly at the expense of higher energy consumption. For other AI applications, users may prefer energy efficiency. For instance, in scenarios where power consumption is a concern, such as battery-powered edge computing devices like mobile phones, drones, laptops, etc., users may prefer energy-efficient execution. This preference may aim to minimize the energy required to perform computations, which might allow for slower response times when needed. These two constraints may not be mutually exclusive, as low latency and low energy might be obtained for the same processing unit. Users of some AI applications may prefer throughput maximization. For instance, for batch processing tasks, such as video processing, users might prioritize high throughput. The goal may be to process the largest amount of data in the shortest amount of time, regardless of the power consumption of individual inferences. Balanced performance may be preferred by users in some scenarios. For instance, some users may seek a balance between latency, energy, and throughput, aiming for a solution that provides reasonable performance across all metrics without significant trade-offs. The user may also choose not to provide any preference when the balanced case is selected by default. In this case, performance/watt may be considered as the metric as it considers both latency and energy.

In some embodiments, the model optimization module 150 may perform model optimizations, such as model optimizations on at least some data-parallel tasks. The optimizations may be software optimizations. In an example, the model optimization module 150 may perform node padding. Node padding may optimize inference of GNNs having dynamic input graphs. For instance, an input graph may get more nodes during the execution of the GNN. The model optimization module 150 may determine the number of additional nodes to be added that the input graph would gain and pad the node embedding matrix or parameter matrix based on the number of additional nodes to be added. For the node embedding matrix, the model optimization module 150 may add at least N extra rows for N extra nodes. The new roes may be added to the bottom of the node embedding matrix. The model optimization module 150 may also add at least N extra rows to the parameter matrix for the N extra nodes. The extra nodes may be referred to as masked nodes. The actual nodes may be referred to as relevant nodes. All the values in each extra row added to the node embedding matrix or parameter matrix may be zeros. The node padding can make the GNN inference on the NPU 120B more efficient, especially for embodiments where the NPU 120B is designed to process static input size.

The model optimization module 150 may also analyze operations allocated to the DSP in the NPU 120B and determine whether any operation can be transferred to the DPU in the NPU 120B. The DPU may be more efficient to process data-parallel tasks. In an example, the model optimization module 150 may transfer a DSP operation for computing intermediate attention score (e.g., in GATs or SAGEs) to the DPU. For such a transfer, the model optimization module 150 may change the control-heavy DSP operation to a data-parallel operation. In some embodiments, tasks that would typically involve complex control logic are optimized to leverage the DPU's strengths, converting them into matrix and elementwise operations that are easily parallelized.

The model optimization module 150 may also convert some operations allocated to the DPU into approximation operations. For instance, the model optimization module 150 may reduce the number of operations in a GNN layer to improve efficiency. The reduction of the number of operations may cause loss of accuracy to some extent, but the accuracy loss may be minimal. In an example, the model optimization module 150 may remove an elementwise multiplication from a GAT layer for computing attention scores. As another example, the model optimization module 150 may remove broadcasting operations for computing attention scores. The model optimization module 150 may perform other types of model optimization that can improve GNN inference efficiency.

The hardware optimization module 160 may optimize data transfer and computations in the NPU 120B to improve GNN inference efficiency. In some embodiments, the hardware optimization module 160 may facilitate acceleration of computations and reduction in data storage and transfer in the NPU 120B based on data sparsity. Input data of some operations may have zero values, e.g., due to padding (such as node padding described above) or other reasons. The hardware optimization module 160 may generate sparsity maps (e.g., sparsity bitmaps) that indicate sparsity patterns of input tensors of neural network options performed by the NPU 120B. In an example, the hardware optimization module 160 may generate one or more sparsity maps for a parameter matrix computed by the precomputation module 140. For at least part of the parameter matrix, the hardware optimization module 160 may generate a sparsity map including elements, each of which corresponding to an element in the parameter matrix and indicate whether the element in the parameter matrix is zero or not. The sparsity maps may be used as configuration parameters for a control unit in the NPU 120B to control data loading. For instance, the control unit may skip loading values that are zero so that the compute unit (e.g., a multiply-accumulate (MAC) unit) can bypass computation on zeros.

The hardware optimization module 160 may also facilitate vertical fusion of DSP operation and DPU operation. In an example, the hardware optimization module 160 may identify that a first operation is to be performed by the DPU and a second operation is to be performed by the DSP using data computed by the DPU from the first operation. The hardware optimization module 160 may determine a pipeline for the two operations so that the second operation can start before the first operation is complete. The hardware optimization module 160 may configure a clock signal that can control both the DPU and DSP. The hardware optimization module 160 may determine when the second operation can start, e.g., the second operation can start after the DPU computes sufficient data for the first computation in the second operation. That way, the DSP may perform the second operation with data that has already been computed by the DPU while the DPU continues performing the first operation. The vertical fusion can reduce the total amount of time needed for finishing the two operations and therefore, improve the GNN inference.

In some embodiments, the hardware optimization module 160 may also quantize data for operations mapped to the NPU 120B. For instance, the hardware optimization module 160 may convert a floating-point data type to an integer data type. The quantization can reduce the total number of bits that need to be stored. Also, it can improve the efficiency of the compute unit. The hardware optimization module 160 may determine quantization parameters for tensors to be quantized. The quantization parameters may include scales and zero points. The hardware optimization module 160 may also perform other types of hardware optimization to improve the performance of the NPU 120B for GNN inference.

The compiler 170 compiles DNNs, including GNNs. In some embodiments, the compiler 170 may generate an executable GNN. The executable GNN may include instructions (e.g., configuration parameters, etc.) that can be executed by the CPU 120A or NPU 120B to carry out neural network operations in the GNN. In some embodiments, the compiler 170 may generate configuration parameters that may be used to configure components of the NPU 120B for DNN executions. The configuration parameters may be stored in one or more configuration registers associated with the components of the NPU 120B.

The compiler 170 may compile a GNN based on outputs of the precomputation module 140, model optimization module 150, and hardware optimization module 160. For instance, a compiled GNN may include a parameter matrix generated by the precomputation module 140 as internal parameters. The compiled GNN may also include sparsity maps generated by the hardware optimization module 160. Further, the compiled GNN may include instruction indicating allocation of tasks to the CPU 120A, the DSP in the NPU 120B, and the DPU in the NPU 120B. The compiled GNN may also include configuration parameters indicating the types of operations to be performed by the CPU 120A, the DSP in the NPU 120B, and the DPU in the NPU 120B.

The datastore 180 stores data received, generated, used, or otherwise associated with the DNN module 110. For example, the datastore 180 stores data received, used, or generated by the precomputation module 140, model optimization module 150, hardware optimization module 160, and compiler 170. The datastore 180 may include one or more memories. In some embodiments, the datastore 180 may be implemented on a memory, such as a main memory that is accessible to the CPU 120A and NPU 120B. In the embodiment of FIG. 1, the datastore 180 is a component of the DNN module 110. In other embodiments, the datastore 180 may be external to the DNN module 110 and communicate with the DNN module 110 through a network.

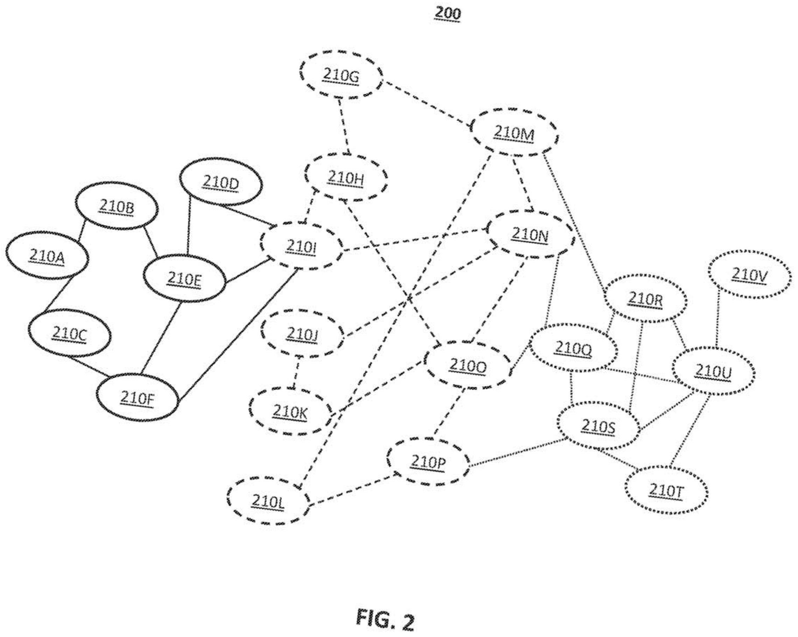

FIG. 2 illustrates a graph 200 of an example GNN, in accordance with various embodiments. The GNN may be a GCN model. As shown in FIG. 2, the graph 200 is a data structure including a collection of nodes 210A-210V (collectively referred to as "nodes 210" or "node 210"). The lines linking the nodes 210 indicate connections between the nodes 210. A connection in the graph 200 is referred to as an edge. The nodes 210 and edges in FIG. 2 are shown for the purpose of illustration. In other embodiments, the graph 200 may include a different number of nodes or different edges.

The graph 200 may be used to represent various types of data, such as text, image, data about a social network, and so on. In an example where the graph 200 represents an image, a node 210 may represent a feature in the image. The edges may indicate relationships between the features in the image. A node 210 may be associated with an embedding that encodes information about the feature, such as color, shape, size, classification, and so on. In another example, the graph 200 may represent an area, e.g., an area surrounding a robot. A node 210 may represent a spot or object in the area. An edge may indicate a traveling path in the area. In another example, the graph 200 may represent a social network. A node 210 may represent a person using the social network. The edges may indicate affinity among the people in the social network. In other examples, the graph 200 may represent other data.

GCNs may perform neighborhood aggregation by applying a convolutional operation that averages features from immediate neighbors, effectively capturing local graph structure. The graph 200 may work with graph-structured data by incorporating information about the relationships between data points. Each node 210 may be associated with a feature vector, and the GCN may learn to update these feature vectors by aggregating information from neighboring nodes. This aggregation may be done through a series of graph convolutional (GraphConv) layers, where each layer combines information from a node's neighbors to update its own representation. For instance, the graph 200 shown in FIG. 2 may have three GraphConv layers. The first layer includes the nodes and edges represented by solid circles and lines. The second layer includes the nodes and edges represented by dashed circles and lines. The first layer includes the nodes and edges represented by dotted circles and lines. By stacking these layers, the GCN can capture complex relationships and dependencies within the graph.

A key advantage of GCNs is their ability to generalize well to unseen or partially observed data. This is particularly useful in tasks such as node classification, link prediction, and graph classification, where the underlying graph structure plays a crucial role in making predictions. GCNs have been successfully applied in various domains, including social networks, recommendation systems, bioinformatics, and drug discovery, showcasing their versatility and effectiveness in handling graph data. GCNs may face challenges in handling graphs with varying node degrees, as they treat all neighbors equally during aggregation, which can lead to suboptimal feature representation.

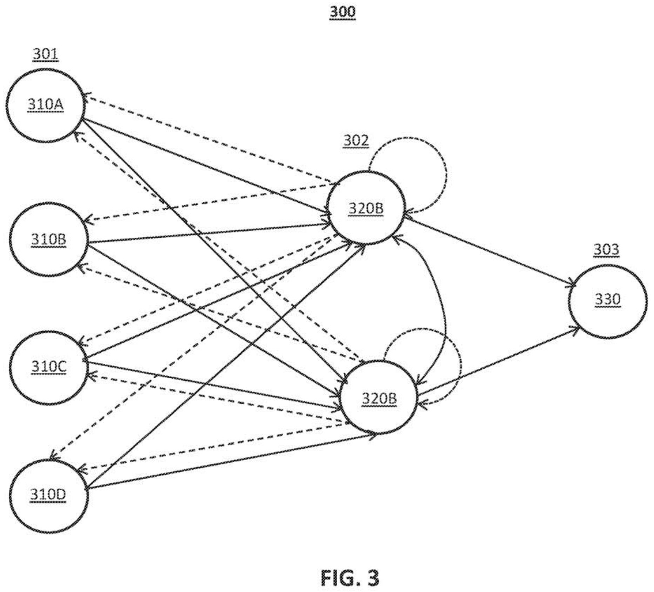

FIG. 3 illustrates a graph 300 another example GNN, in accordance with various embodiments. The GNN may be a GAT model. As shown in FIG. 3, the graph 300 includes three layers 301, 302, and 303 in a sequence. The layer 302 is between the layer 301 and the layer 303. The layer 301 includes four neurons 310A-310D (collectively referred to as "neurons 310" or "neuron 310"). The layer 302 includes two neurons 320A and 320B (collectively referred to as "neurons 320" or "neuron 320"). The layer 303 includes one neuron 330. In other embodiments, the graph 300 may include a different number of layers. A layer may include a different number of neuron(s).

The GAT may have an attention mechanism to assign different weights to neighboring nodes based on their importance, enabling the model to focus on more relevant features while aggregating. This attention-based aggregation can allow the GAT to capture more nuanced relationships between nodes, enhancing their expressiveness compared to GCNs.

In some embodiments, the GAT may be used for tasks where modeling the relationships between entities is crucial, such as social network analysis, recommendation systems, and biology. In the GAT, each node in the graph may be associated with a feature vector. The importance of neighboring nodes can be weighted when aggregating information. This allows the GAT to focus on relevant nodes during message passing, enabling it to learn complex patterns and dependencies in the graph data. During the training process, the GAT can learn to assign different attention weights to neighboring nodes based on the content of the nodes and the relationships between them. By iteratively aggregating information from neighboring nodes with different attention weights, the GAT can capture both local and global dependencies in the graph 300.

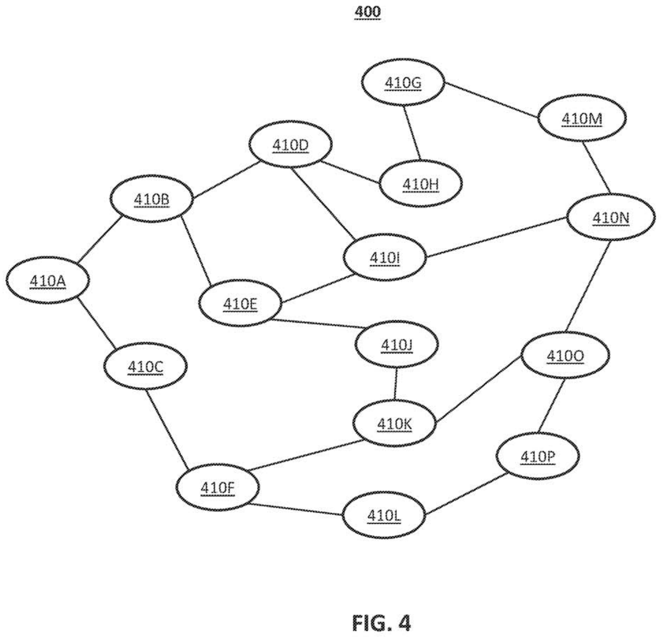

FIG. 4 illustrates a graph 400 of yet another example GNN, in accordance with various embodiments. The GNN in FIG. 4 may be a GraphSage model. The graph 400 includes nodes 410A-410P (collectively referred to as "nodes 410" or "node 410"). The lines linking the nodes 410 indicate connections between the nodes 410. A connection in the graph 400 is referred to as an edge. The nodes 410 and edges in FIG. 4 are shown for the purpose of illustration. In other embodiments, the graph 400 may include a different number of nodes or different edges.

The GraphSage model can address scalability issues in GCNs, particularly in large graphs, e.g., where the entire neighborhood cannot be processed due to memory constraints. Instead of aggregating all neighbors, the GraphSage model may employ a sampling strategy to collect a fixed-size subset of neighbors, facilitating efficient computation. The aggregation step may collect features from the sampled or attended neighbors, while the combination step applies a learnable weight matrix and nonlinear activation functions, similar to GCNs. This flexibility in aggregation and the introduction of attention mechanisms make the GraphSage model a powerful tool for effectively learning from complex graph structures.

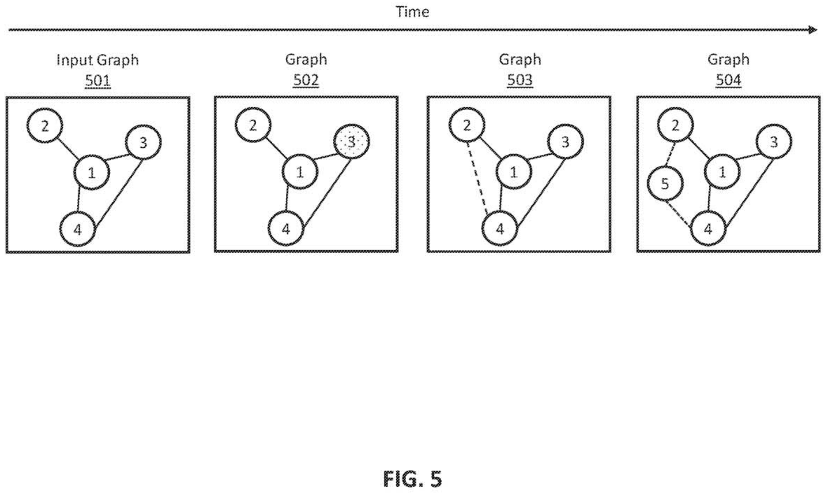

FIG. 5 illustrates changes of an input graph 501 over time, in accordance with various embodiments. Input graphs of GNNs may be dynamic. For instance, GNNs are employed to process time-varying, dynamic graphs where the structure-including nodes and edges-can frequently change. For the purpose of illustration and simplicity, the input graph 501 includes four nodes: nodes 1 through 4 shown by four circles in FIG. 5. The input graph 501 also has four edges: one edge connecting node 1 to node 2, one edge connecting node 1 to node 3, one edge connecting node 1 to node 4, and one edge connecting node 3 to node 4. The input graph 501 changes over time. In the example shown by FIG. 5, the input graph 501 changes to a graph 502 due to a change in the active time of an application associated with node 3, which is highlighted by a dotted pattern in FIG. 5. The graph 502 still has the four nodes (with the updated node 3) and the four edges.

The graph 502 changes to a graph 503 when a file is added. For instance, the file may be added as an email attachment. The addition of the file leads to the addition of a new edge, i.e., an edge connecting node 2 and node 4. The new edge is shown by a dashed line in FIG. 5. The graph 503 has four nodes and five edges. The graph 503 changes to a graph 504 when a new file is created and added. This new file may also be added as an attachment. The creation and addition of this new file leads to a new node: node 5. Node 5 is connected with node 2 and node 4 through two new edges, respectively. The graph 504 has five nodes and six edges as shown in FIG. 5. The two new edges are shown by dotted lines in FIG. 5. The graph changes shown in FIG. 5 are examples. Input graphs of GNNs may experience other types of changes.

Many NPUs are optimized for static models with fixed input shapes, resulting in considerable overhead when dealing with dynamic graphs. Each structural change, such as the addition of new nodes or edges in a knowledge graph, can necessitate recompilation, incurring delays and resource inefficiencies. This challenge can be especially critical for applications like personal assistants, which depend on continuously updated, on-device knowledge graphs to deliver accurate, real-time information.

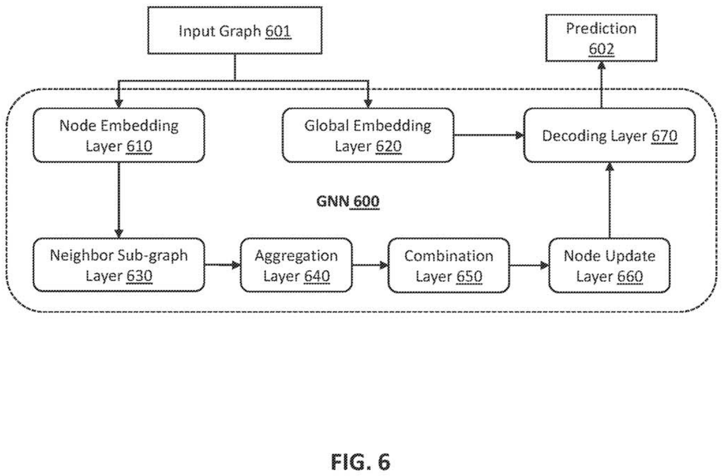

FIG. 6 illustrates a GNN execution flow, in accordance with various embodiments. For the purpose of illustration, FIG. 6 shows a GNN 600 that receives an input graph 601 and makes a prediction 602 by processing the input graph 601 through various layers of the GNN 600. The GNN 600 includes a node embedding layer 610, a global embedding layer 620, a neighbor subgraph layer 630, an aggregation layer 640, a combination layer 650, a node update layer 660, and a decoding layer 670. In other embodiments, the GNN 600 may include fewer, more, or different layers. Each layer may represent a phase in the GNN execution flow. In some embodiments, multiple layers shown in FIG. 6 may be a single layer in some GNNs. Also, a single layer in FIG. 6 may be multiple layers in some GNNs.

The input graph 601 is first processed in the node embedding layer 610. The node embedding layer 610 may convert the input graph into feature tensors, such as feature vectors or feature matrices. The node embedding layer 610 may include vectorization, encoding transformations, layout changes, etc.

Then the feature tensors may be processed through a sequence of layers including the neighbor subgraph layer 630, aggregation layer 640, combination layer 650, and node update layer 660. This sequence may be iterated multiple times. The neighbor subgraph layer 630 may create a subgraph of the neighboring nodes. The neighbor subgraph layer 630 may include sampling or indirect accessing.

The aggregation layer 640 may include accumulation of the features of the neighboring nodes. For instance, the subgraphs generated at the neighbor subgraph layer 630 may be aggregated at the aggregation layer 640. In some embodiments, neighboring nodes may have one-hop connections. The aggregation layer 640 may also include transformation over the vertex and edge feature vectors, such as reduce mean, pool, fully connected DNN, etc. Vertex and edge aggregation may follow different algorithms and node selection schemes. Various sampling techniques may be used. Operations in the aggregation layer 640 may be sparse or irregular operations. In some embodiments, the aggregation layer may result in irregular access patterns due to varying graph connections.

The combination layer 650 may include feature extraction. DNN transformations may be applied over aggregated vertex or edge feature vectors for deriving high-level feature representations or relations. The combination layer 650 may include dense or regular computations. In the combination layer 650, neural transformations may be applied over these aggregated features to derive higher-level relationships, e.g., by using fully-connected layers or attention mechanisms. At the node update layer 660, the vertices and edges may be updated with the information gathered from their neighbors.

The output of the node update layer 660 may be further processed at the decoding layer 670. At the decoding layer 670, the features may be transformed into usable results through operators, such as multiplayer perceptron (MLP), SoftMax, and so on. Then, the GNN 600 may output the prediction 602. From an execution time perspective, most of the compute time in the GNN execution may be spent on the execution of the aggregation layer 640 and combination layer 650, while the other layers (e.g., the node embedding layer 610) may result in less overhead.

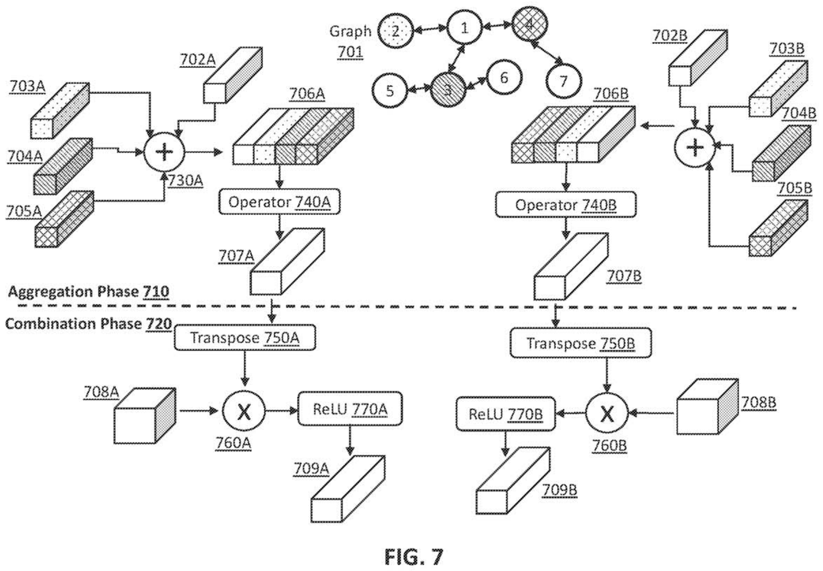

FIG. 7 illustrates GNN layer computation, in accordance with various embodiments. For the purpose of illustration, the GNN layer illustrated in FIG. 7 has an aggregation phase 710 and a combination phase 720. The GNN layer receives a graph 701. The graph 701 may be an intermediate graph in the GNN. The graph 701 includes seven nodes: node 1 through node 7. The graph 701 also includes six edges. Each edge is between two nodes. The aggregation phase 710 includes node feature aggregation and edge feature aggregation.

In the aggregation phase 710, a node feature vector 702A is aggregated with node feature vector 703A, node feature vector 704A, and node feature vector 705A by using an concatenator 730A. The node feature vector 702A may represent node 1. The node feature vector 703A may represent node 2. The node feature vector 704A may represent node 3. The node feature vector 705A may represent node 4. The aggregation may be aggregation of feature vectors from immediate neighbors of a node. For instance, node 1 is the node, and the immediate neighbors of node 1 in the graph 701 are node 2, node 3, and node 4. The result of the aggregation is a neighbor feature map 706A. The neighbor feature map 706A may be a one-hop neighbor feature map. The neighbor feature map 706A may be processed by an operator 740A to produce a vector 707A. The vector 707A may represent the aggregated node feature. For the purpose of illustration and simplicity, node 1 has three neighboring nodes in FIG. 7. In other embodiments, the number of neighboring nodes may be much higher, and some GNNs may utilize multi-hop neighbor aggregation strategies, potentially leading to an exponential increase in feature map dimensions.

Also, an edge feature vector 702B is aggregated with edge feature vector 703B, edge feature vector 704B, and edge feature vector 705B by using an concatenator 730B. The edge feature vector 702B may represent edge(s) of node 1. The edge feature vector 703B may represent edge(s) of node 2. The edge feature vector 704B may represent edge(s) of node 3. The edge feature vector 705B may represent edge(s) of node 4. The aggregation may be aggregation of feature vectors from immediate neighbors of a node. For instance, node 1 is the node, and the immediate neighbors of node 1 in the graph 701 are node 2, node 3, and node 4. The result of the aggregation is a neighbor feature map 706B. The neighbor feature map 706B may be a one-hop neighbor feature map. The neighbor feature map 706B may be processed by an operator 740B to produce a vector 707B. The vector 707B may represent the aggregated node feature.

In the combination phase 720, the vector 707A is transposed by a transpose operator 750A. The transposed vector is multiplied with a weight matrix 708A by a MatMul operator 760A. The product is further processed by a ReLU (Rectified Linear Unit) operator 770A. The ReLU operator 770A may perform ReLU activation and normalization. The ReLU operator 770A outputs a vector 709A. Also, the vector 707B is transposed by a transpose operator 750B. The transposed vector is multiplied with a weight matrix 708B by a MatMul operator 760B. The product is further processed by a ReLU operator 770B. The ReLU operator 770B may perform ReLU activation and normalization. The ReLU operator 770B outputs a vector 709B. The vector 709A and vector 709B are the output of the GNN layer. The vector 709A and vector 709B may go through further aggregation and combination in subsequent GNN layers. Even though not shown in FIG. 7, the combination phase 720 may also include a pooling operation, which may refine the feature representation, consolidating information for further processing in the GNN architecture.

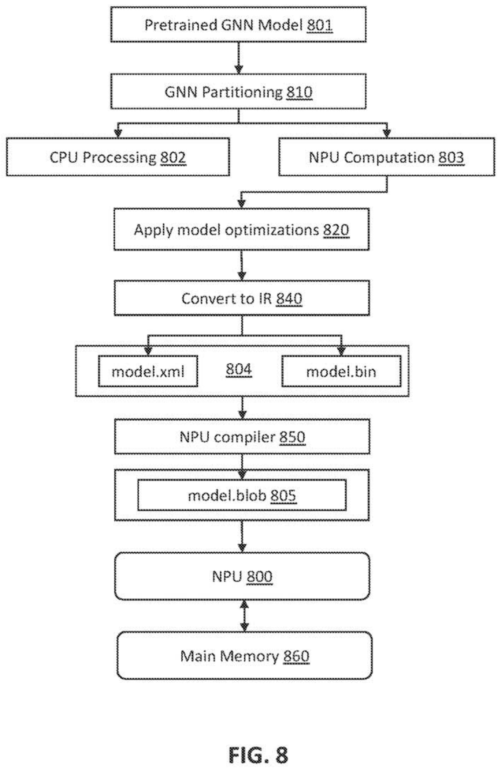

FIG. 8 illustrates a flow for enabling a GNN on an NPU 800, in accordance with various embodiments. FIG. 8 shows an end-to-end methodology that enables a pretrained GNN model 801 to run on the NPU 800. This methodology may not require retraining the pretrained GNN model 801, ensuring efficient deployment while preserving model performance. The process can leverage CPU and NPU partitioned inference, which distributes control-intensive tasks like graph preprocessing to the CPU and parallelized GNN computations to the NPU 800. Such partitioned inference can significantly reduce overall latency.

As shown in FIG. 8, GNN partitioning is performed in Step 810. The pretrained GNN model 801 may be partitioned into CPU processing 802 (i.e., processing at a CPU) and NPU computation 803 (i.e., computation on the NPU 800). In some embodiments, Step 810 may be performed using an offline profile table. The profile table may list operators in the pretrained GNN model 801 and latency of the operators. Examples of the operators may include gather, select, matrix multiplication (MatMul), and so on. These operators may be classified as either CPU processing 802 or NPU computation 803 based on their latency. In some embodiments, the CPU processing 802 may be control-flow dominant graph processing. The NPU computation 803 may be data-parallel GNN computation.

Then model optimizations may be applied on the NPU computation 803 in Step 830. The model optimizations may include, for example, node padding, transfer DSP operations (e.g., control-heavy DSP operations) to DPU (or vice versa), approximation computation, and so on. The model optimizations may be software optimizations. After the model optimizations, the NPU computation 803 is converted to an intermediate representation 804 in Step 840. The intermediate representation 804 includes two parts: model.xml and model.bin. The intermediate representation 804 is input into an NPU compiler 850 where compilation is performed. The NPU compiler 850 produces an executable model 805, which is represented as model.blob. In some embodiments, the NPU compiler may further enhance execution efficiency by introducing hardware-optimized strategies, including sparse storage and computation, which reduce memory use, and vertical fusion of operations, which can enable pipelined execution of tasks like matrix multiplication and SoftMax. Additionally, quantization enables low-precision INT8 operations, optimizing performance per watt while maintaining accuracy. Together, these optimizations provide a streamlined, high-performance pathway for deploying GNNs on specialized hardware. In some embodiments, the GNN partitioning, model optimization, generation of the intermediate representation 804, or compilation may be run using a CPU.

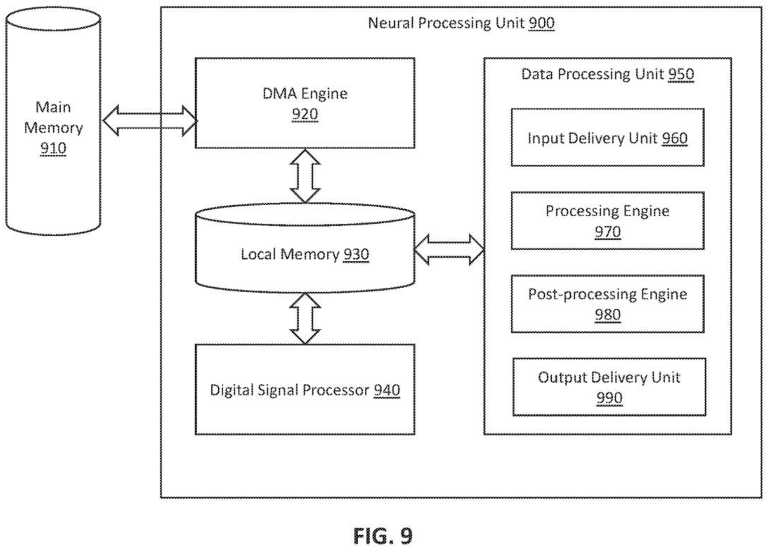

The NPU 800 may perform the GNN computation using the executable model 805. The NPU 800 is associated with a main memory 860. The main memory 860 may be accessible by the CPU too. In some embodiments, the intermediate representation 804 or executable model 805 may be stored in the main memory. Also, data generated by the NPU 800 may be stored in the executable model 805. The methodology shown in FIG. 8 provides a comprehensive, end-to-end strategy for efficient GNN deployment, requiring no modifications to the existing NPU hardware. This streamlined approach can maximize compatibility and performance by fully utilizing the NPU's capabilities with optimized software and compiler techniques, enabling effective execution of GNNs without altering hardware design. Certain aspects regarding NPU are described below in conjunction with FIG. 9.

FIG. 9 is a block diagram of an NPU 900, in accordance with various embodiments. The NPU 900 is an example of the NPU 800 in FIG. 8. The NPU 900 can perform DNN computation, including GNN computation. For instance, the NPU 900 can execute layers in a GNN by carrying out neural network operations in the layers, such as aggregation, combination, and so on. The layers may be arranged in a sequence, and the NPU 900 may execute the layers in the sequence. The execution of the DNN may be for training the DNN or for using the DNN to perform AI tasks.

The NPU 900 is coupled to a main memory 910. The main memory 910 is an example of the main memory 860 in FIG. 8. The main memory 910 stores data associated with neural network operations performed by the NPU 900. In some embodiments, the main memory 910 may store data to be used by the NPU 900 for executing neural network operations. The main memory 910 may store inputs to DNNs and outputs of DNNs. The main memory 910 may also store activations (such as input activations and output activations of neural network operations) and weights (such as weights determined by training DNNs) in DNNs. In some embodiments, the main memory 910 may store activations and weights with floating-point precisions, such as FP4, SF4, NF4, FP16, BP16, FP32 and so on. The main memory 910 may also quantized activations or weights. The main memory 910 includes one or more DRAMs.

As shown in FIG. 9, the NPU 900 includes a direct memory access (DMA) engine 920, a local memory 930, and a DSP 940, and a DPU 950. In other embodiments, alternative configurations, different or additional components may be included in the NPU 900. For example, the NPU 900 may include more than one main memory 910 or DMA engine 920. As another example, the NPU 900 may include a single DPU 950. Further, functionality attributed to a component of the NPU 900 may be accomplished by a different component included in the NPU 900 or by a different system. A component of the NPU 900 may be implemented in hardware, software, firmware, or some combination thereof.

The DMA engine 920 facilitates data transfer between the main memory 910 and the local memory 930. For example, the DMA engine 920 can read data from the main memory 910 and write data into the local memory 930. As another example, the DMA engine 920 can read data from the local memory 930 and write data into the main memory 910. For instance, the DMA engine 920 may read input activations and weights of convolution from the main memory 910 and load the input activations and weights to the local memory 930. The DMA engine 920 may also write output activations of convolutions computed by DSP 940 or DPU 950 from the local memory 930 to the main memory 910. The DMA engine 920 provides a DMA feature that allows the DPU 950 to initiate data transfer between the main memory 910 and the local memory 930 and to perform other operations while the data transfer is being conducted. In some embodiments, the DMA engine 920 may read tensors from the main memory 910, modify the tensors in a way that is optimized for the DSP 940 or DPU 950 before it writes the tensors into the local memory 930.

The local memory 930 is local to the NPU 900. The local memory 930 is accessible to both the DSP 940 and DPU 950. In the embodiments of FIG. 9, the local memory 930 is inside the NPU 900. In other embodiments, the local memory 930 may be outside the NPU 900. Data in the local memory 930 may be transferred to or from the main memory 910, e.g., through the DMA engine 920. In some embodiments, data in the local memory 930 may be transferred to or from the local memory of another NPU. The local memory 930 may store data received, used, or generated by the DSP 940 or DPU 950. Examples of the data may include input activations, weights, output activations, configuration parameters, and so on.

In some embodiments, the local memory 930 includes one or more SRAMs. The local memory 930 may be byte-addressable, and each memory address identifies a single byte (eight bits) of storage. In some embodiments, the local memory 930 may include memory banks. The number of data banks in the local memory 930 may be 16, 64, 128, 956, 512, 924, 2048, or other numbers. A memory bank may include a plurality of storage units. In an example, a data bank may include 8, 16, 64, or a different number of storage units. A memory bank or a storage unit in a memory bank may have a memory address. In an example, a storage unit may store a single byte, and data larger than a single byte may be stored in storage units with consecutive memory addresses, i.e., adjacent storage units. For instance, a storage unit can store an integer number in the INT8 format, versus two storage units may be needed to store a number in the FP16 or BF16 format, which has 16 bits. In some embodiments, 16 bits can be transferred from the local memory 930 in a single read cycle. In other embodiments, 16 bits can be transferred from the local memory 930 in multiple read cycles, such as two cycles.

The DSP 940 performs computations in DNN layers, including computations in group quantization-based neural network operations. In some embodiments, the DSP 940 can perform generic computations such as addition, subtraction, multiplication, division, logical, bitwise operations, and other nonlinear computations (in terms of table look-up or polynomial approximation). The DSP 940 may be a very long instruction word (VLIW) processor. In some embodiments, the DSP 940 may have an architecture optimized for the operational needs of digital signal processing. In some embodiments, the DSP 940 may perform some computations in a neural network operation, while other computations in the neural network operation may be performed by the DPU 950. The DSP 940 may support non-traditional operations or non-MatMul or non-convolution-based operations within DNNs.

In some embodiments, the DSP 940 may operate in accordance with a clock signal. For instance, the timing when the DSP 940 can execute instructions may be synchronized with the clock signal. In some embodiments, the DSP 940 may be pipelined along with the DMA engine 920 or the DPU 950, thereby enabling parallel computations to improve overall performance. The DSP 940 may be implemented on a microprocessor chip, which may be separate from a chip implementing the DPU 950. In some embodiments, the DSP 940 may be a Streaming Hybrid Architecture Vector Engine (SHAVE) processor. Even though FIG. 9 shows a single DSP, the DPU 950 may include multiple DSPs. The DSPs may be arranged in an array.

The DPU 950 can perform neural network operations in DNNs. For instance, the DPU 950 may execute a DNN layer by running one or more deep learning operations in the DNN layer. A DPU 950 may execute a layer, or a portion of a layer, at a time. The DPU 950 may also be referred to as a compute core, compute block, or compute tile. The DPU 950 may be capable of running various types of neural network operations, such as convolution, matrix multiplication, SoftMax operation, pooling, elementwise operation, linear operation, nonlinear operation, and so on. Neural network operations performed by the DPU 950 include tensor operations, i.e., operations whose inputs are tensors or operations whose outputs are tensors. In an example, the DPU 950 receives an input tensor and one or more convolutional kernels and performs a convolution with the input tensor and convolutional kernels. The result of the convolution may be an output tensor, which can be further computed, e.g., by the DPU 950 or another DPU 950.

In the embodiments of FIG. 9, the DPU 950 includes an input delivery unit (IDU) 960, a processing engine 970, a post-processing engine 980, and an output delivery unit (ODU) 990. Some or all the components of the DPU 950 can be implemented on the same chip. In other embodiments, alternative configurations, different or additional components may be included in the DPU 950. Further, functionality attributed to a component of the DPU 950 may be accomplished by a different component included in the DPU 950, a different DPU 950, another component of the NPU 900, or a different system. A component of the DPU 950 may be implemented in hardware, software, firmware, or some combination thereof.

The IDU 960 loads data from the local memory 930 to the processing engine 970 or to the post-processing engine 980. The IDU 960 may read tensors from the local memory 930. The tensors may include activation tensors, weights tensor, and so on. The IDU 960 may perform group-wise loading of activations or weights. In some embodiments, the IDU 960 may read data from the local memory 930 and write the data into storage units in the processing engine 970. For instance, the IDU 960 may load activations into activation register files in the processing engine 970 and load weights into weight register files in the processing engine 970. The IDU 960 may have an activation reader for loading activations and a weight reader for loading weights. In some embodiments, the IDU 960 may read configuration parameters from the local memory 930 and load the configuration parameters into configuration registers or other configurable components (e.g., LUTs) of the processing engine 970 or post-processing engine 980.

The processing engine 970 performs operations in DNNs. The processing engine 970 may include one or more processing cells. In some embodiments, the processing cells may be arranged in one or more rows and one or more columns in the processing engine 970. Each processing cell may include PEs that may be arranged in an array that includes rows and columns. All the PEs in the processing engine 970 may constitute a bigger array that includes more rows and columns. An example PE may be or may include one or more multiply-accumulate (MAC) units that can perform MAC operations. In some embodiments (e.g., embodiments where the DPU 950 executes a convolutional layer), a computation in an MAC unit may be an MAC operation on an activation operand and a weight operand. The activation operand may be an activation tensor that may include one or more activations in the input tensor of the convolution. Different activations may be in different input channels. The weight operand may be a weight tensor that may include one or more weights in the filter of the convolution. The values of the weights are determined through training the DNN or compressing the neural network operation after training. The weights in the weight operand may be in different input channels. In some embodiments, the activation operand or weight operand is a vector along the input channel dimension.

In some embodiments, an MAC unit includes one or more multipliers for performing multiplications. An MAC unit may also include one or more accumulators ("adders") for performing accumulations. An MAC unit may also include one or more shifters to facilitate mixed-precision computations. A column of MAC units is referred to as an MAC column. An MAC column may be associated with one or more MAC lanes. A MAC lane is a path for loading data e.g., by the IDU 960, into an MAC column. A MAC lane may be also referred to as a data transmission lane or data loading lane. An MAC column may have multiple MAC lanes. The loading bandwidth of the MAC column is an aggregation of the loading bandwidths of all the MAC lanes associated with the MAC column. With a certain number of MAC lanes, data can be fed into the same number of independent MAC units simultaneously. In some embodiments where an MAC column has four MAC lanes for feeding activations or weights into the MAC column and each MAC lane may have a bandwidth of 16 bytes, the four MAC lanes can have a total loading bandwidth of 64 bytes.

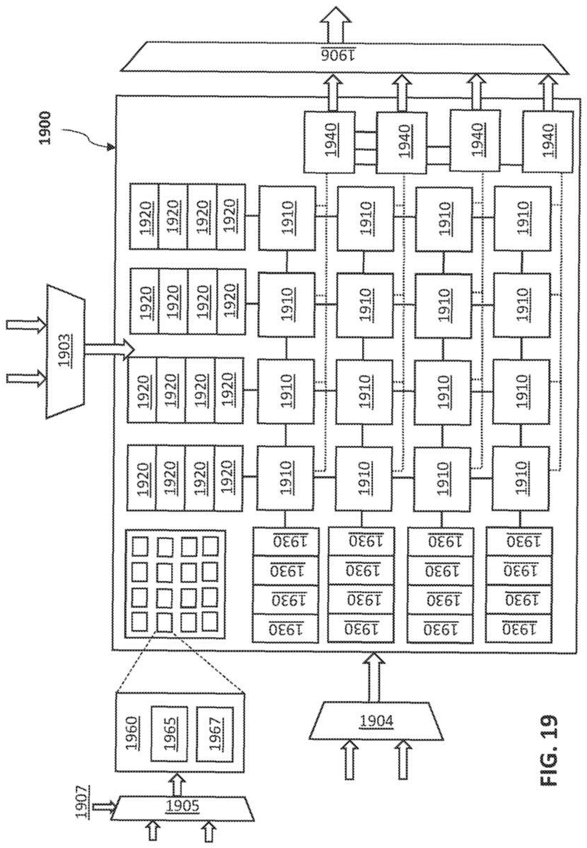

In some embodiments, a processing cell may have a sparsity logic unit for accelerating computations in DNNs based on data sparsity. For instance, the sparsity logic unit may obtain or generate a sparsity bitmap and use the sparsity bitmap to identify nonzero values in the activation register files or weight registers files and send nonzero values to the PEs for performing computation, while zero values in the activation register files or weight registers files are skipped. Certain aspects regarding processing engine are described below in conjunction with FIGS. 19-20.

The post-processing engine 980 may process outputs of the processing engine 970. The post-processing engine 980 may include one or more post-processing elements (PPEs). In some embodiments, the PPEs in the post-processing engine 980 may be arranged in an array that has rows and columns. In some embodiments, the post-processing engine 980 computes activation functions. The post-processing engine 980 may receive outputs of the processing engine 970 as inputs to the activation functions. In addition or alternative to activation functions, the post-processing engine 980 may perform other types of post processing on outputs of the processing engine 970. For instance, the post-processing engine 980 may apply a bias on an output of the processing engine 970. In some embodiments, the post-processing engine 980 may be bypassed for certain neural network operations.

The ODU 990 drains data from the processing engine 970 or from the post-processing engine 980, e.g., from register files in the processing engine 970 or from the post-processing engine 980. The drain module may write the data to the local memory 930. The drained data may be tensors, such as output tensors of neural network operations. In some embodiments, the ODU 990 may drain data on a cell level. For each processing cell, the ODU 990 may drain outputs of PEs in the processing cell based on a row index or column index of each PE. For instance, the ODU 990 may use a sequence of cycles to drain data from a processing cell. The ODU 990 may drain the output of some of the PEs in each cycle. The sequence of the cycles may be configured based on a configuration parameter indicating the operation mode of the IDU 960.

In some embodiments, the ODU 990 includes sparsity encoding logic that can convert outputs of the processing engine 970 from a dense format to a sparse format. For instance, the ODU 990 may be implemented with one or more sparsity encoders. A sparsity encoder converts dense data to compressed data based on sparsity in the dense data. For instance, the sparsity encoder may remove zeros from data computed by the processing engine 970. The sparsity encoder may also generate sparsity maps that represent sparsity in the dense data. A sparsity map may be a sparsity bitmap, in which each bit may correspond to a data point and indicate whether the data point is zero or not.

In some embodiments, the data drained from the processing engine 970 may be output data elements of a DNN layer. The sparsity encoder may generate a compressed version of the output tensor. The sparsity encoder may identify every zero activation in the output tensor and remove these activations from the output tensor to generate a compressed activation tensor (aka "sparse activation tensor"). The sparsity encoder may also generate one or more sparsity maps for the output tensor. A sparsity map may indicate sparsity in at least part of the output tensor. The sparsity map may include sparsity elements (e.g., bits), each of which corresponds to a different activation in the vector and indicates whether the corresponding activation is zeroed or not.

The ODU 990 may write the compressed activation tensor and the one or more sparsity maps into the local memory 930. The sparse activation tensor and the one or more sparsity maps may be further loaded to the main memory 910, e.g., through the DMA engine 920.

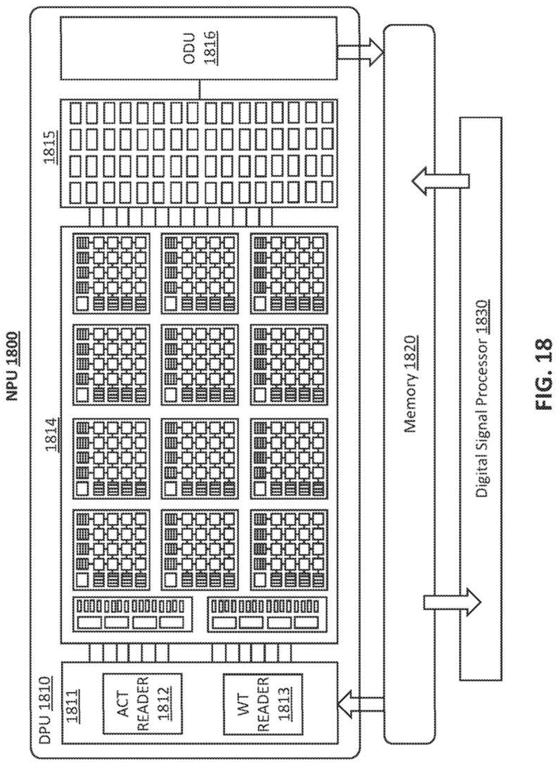

Additionally or alternatively, the sparse activation tensor and the one or more sparsity maps may be loaded by the IDU 960 to the processing engine 970 for further computation, e.g., for performing a deep learning operation in the next layer. Certain aspects regarding DPU are described below in conjunction with FIG. 18.

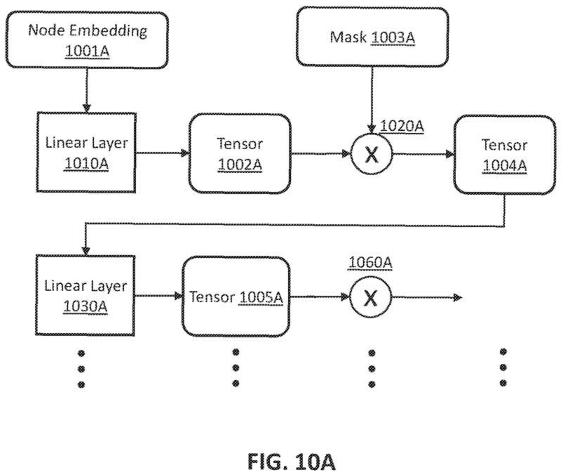

FIG. 10A illustrates GCN execution based on static input graphs, in accordance with various embodiments. A node embedding 1001A may be used as an input. The node embedding 1001A may be a matrix. The matrix may include W × H data points, where H is the height of the matrix, W is the width of the matrix. W × H may indicate the spatial shape of the node embedding 1001A. The node embedding 1001A is input into a linear layer 1010A in the GCN. In the linear layer 1010A, a weight matrix may be applied on the node embedding 1001A. The linear layer 1010A may output a tensor 1002A, which may have the same spatial shape as the node embedding 1001A. The tensor 1002A is then multiplied with a mask 1003A by a MatMul operator 1020A to output a tensor 1004A. In some embodiments, the mask 1003A may be a norm matrix used for achieving static input graph. In an example (e.g., when the spatial shape of the tensor 1002A is 3 × 4), the mask 1003A may be:

$$
\begin{bmatrix}
\frac{1}{4} & \frac{1}{\sqrt{8}} & \frac{1}{\sqrt{12}} & \frac{1}{\sqrt{12}} \\
\frac{1}{\sqrt{8}} & \frac{1}{2} & 0 & 0 \\
\frac{1}{\sqrt{12}} & 0 & \frac{1}{3} & \frac{1}{3} \\
\frac{1}{\sqrt{12}} & 0 & \frac{1}{3} & \frac{1}{3}
\end{bmatrix}.
$$

The tensor 1004A is input into a linear layer 1030A. In the linear layer 1030A, a weight matrix may be applied on the tensor 1004A. The linear layer 1030A outputs a tensor 1005A. The spatial shape of the tensor 1005A remains the same as the spatial shape of the tensor 1002A The tensor 1005A may then be further processed by the MatMul operator 1060A, e.g., in an aggregation phase. The aggregation phase may be iterated multiple times.

In some embodiments, the mask 1003A is tailed to the fixed input graph. The mask 1003A may be precomputed. For instance, the mask 1003A may be computed before the execution of the GNN starts and the data points in the mask 1003A may be stored as parameters. The mask 1003A may also be referred to as a parameter tensor. By leveraging a precomputed mask tailored to a fixed input graph, it transforms the aggregation of node features in graph convolution into a streamlined matrix multiplication operation, fully utilizing the NPU's optimized capabilities. This precomputed mask can establish node connections beforehand, significantly reducing irregular memory access and improving memory latency, inference speed, and energy efficiency, all without extensive hardware modifications.

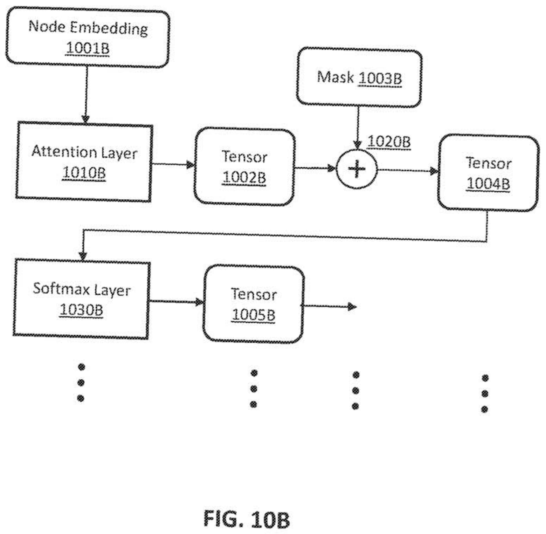

FIG. 10B illustrates GAT execution based on static input graphs, in accordance with various embodiments. A node embedding 1001B may be used as an input. The node embedding 1001B may be a matrix. The matrix may include W × H data points, where H is the height of the matrix, W is the width of the matrix. W × H may indicate the spatial shape of the node embedding 1001B. The node embedding 1001B is input into an attention layer 1010B in the GAT. The attention layer 1010B may output a tensor 1002B, which may have a different spatial shape as the node embedding 1001B. In an example, the spatial shape of the tensor 1002B is 3 × 4, while the spatial shape of the tensor 1002B is 4 × 4. The data points in the tensor 1002B may be intermediate attention scores. The tensor 1002B may be an intermediate attention matrix.

The tensor 1002B is then accumulated with a mask 1003B by a concatenator 1020B to output a tensor 1004B. In some embodiments, the mask 1003B is tailed to the fixed input graph. The mask 1003B may be precomputed. For instance, the mask 1003B may be computed before the execution of the GAT starts and the data points in the mask 1003B may be stored as parameters. The tensor 1004B has the same spatial shape as the tensor 1002B. In some embodiments, the mask 1003B may be an attention mask used for achieving static input graph. The mask 1003B may be precomputed as stored as model parameter. The mask 1003B can facilitate efficient calculation of intermediate attention scores with basic addition operations. In an example, the mask 1003B may be:

$$
\begin{bmatrix}
0 & 0 & 0 & 0 \\
0 & 0 & -\infty & -\infty \\
0 & -\infty & 0 & 0 \\
0 & -\infty & 0 & 0
\end{bmatrix}.
$$

The tensor 1004B is input into a SoftMax layer 1030B. The SoftMax layer 1030B produces a tensor 1005B. The data points in the tensor 1005B may be attention scores. The spatial shape of the tensor 1005B remains the same as the spatial shape of the tensor 1002B. The tensor 1005B may then be further processed in the GAT.

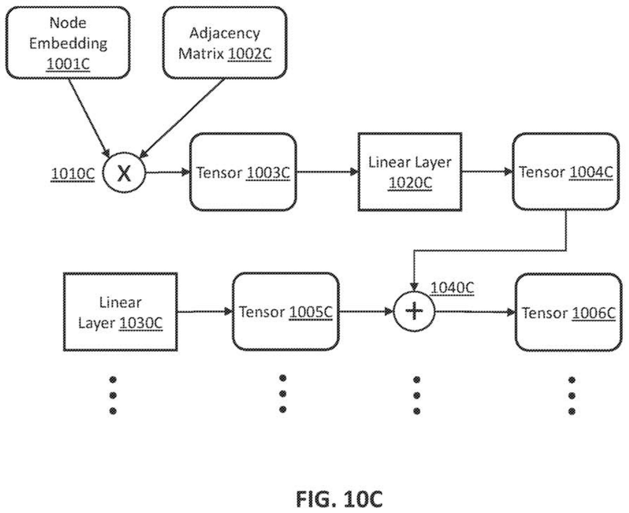

FIG. 10C illustrates GraphSAGE execution based on static input graphs, in accordance with various embodiments. A node embedding 1001C may be used as an input. The node embedding 1001C may be a matrix. The matrix may include W × H data points, where H is the height of the matrix, W is the width of the matrix. W × H may indicate the spatial shape of the node embedding 1001C. The node embedding 1001C and an adjacency matrix 1002C are input into an MatMul operator 1010C in the GraphSAGE model. The MatMul operator 1010C may output a tensor 1003C, which may have the same spatial shape as the node embedding 1001C. The tensor 1003C may represent mean aggregated features.

In some embodiments, the adjacency matrix 1002C may be a sample adjacency matrix used for achieving static input graph and may be saved as model parameter. The adjacency matrix 1002C can be used for aggregation during inference. In an example, the spatial shape of the node embedding 1001C and the tensor 1003C is $3 \times 4$, while the spatial shape of the adjacency matrix 1002C is $4 \times 4$. The adjacency matrix 1002C may be:

$$\begin{bmatrix} 0 & 1 & 0 & 1 \\ 1 & 0 & 0 & 0 \\ 1 & 0 & 0 & 1 \\ 1 & 0 & 1 & 0 \end{bmatrix}.$$

The tensor 1003C is input into a linear layer 1020C. In the linear layer 1020C, a weight matrix may be applied on the tensor 1003C to produce a tensor 1004C. The spatial shape of the tensor 1004C may be the same as the tensor 1003C. A linear layer 1030C outputs a tensor 1005C. The tensor 1004C and 1005C are input into a concatenator 1040C, which outputs a tensor 1006C. The tensor 1006C may represent the final features.

FIGS. 10A-10C illustrates StaGr, which is a technology for efficient implementation of GNNs for static input graphs. With StaGr, GNNs can be implemented on hardware accelerators, like NPUs, using static input graphs. By tailoring to static input graph, this approach can be particularly beneficial when the graph structure is static and node characteristics vary over time, such as in monitoring applications for systems like computer hardware, where components remain fixed, but their utilization or status fluctuates. By leveraging this technique, highly efficient inference can be achieved, significantly reducing computational overhead and latency and delivering optimal performance on NPUs under fixed-structure conditions.

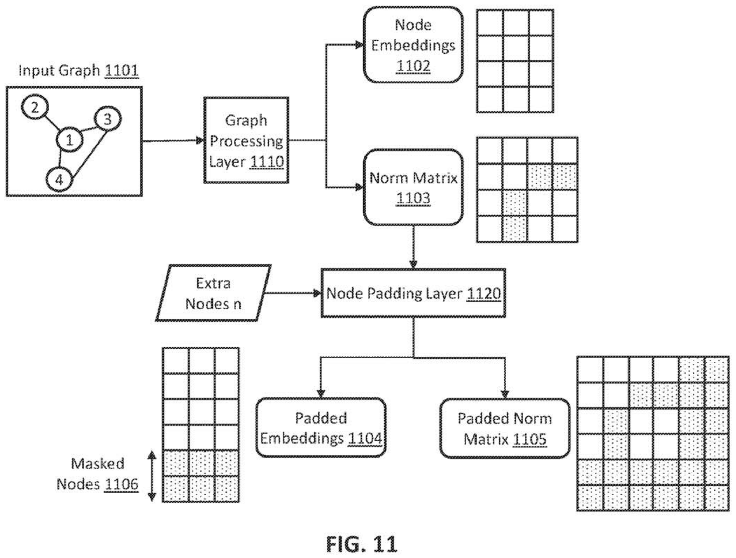

FIG. 11 illustrates dynamic input graph support for GNNs via node padding, in accordance with various embodiments. FIG. 11 shows GrAd & NodePad, which is a technology of handling time-varying input graphs using dynamic mask and compiled model with padded nodes. In some embodiments, a mask may be used as an input rather than precomputed weight, allowing dynamic updates to edges without needing to recompile the model.

As shown in FIG. 11, an input graph 1101 is input into a graph processing layer 1110, which may be an example of the graph processing layer described above. The graph processing layer 1110 outputs node embeddings 1102 and a norm matrix 1103. In the example shown by FIG. 11, the spatial shape of the node embeddings 1102 is $3 \times 4$, while the spatial shape of the norm matrix 1103 is $4 \times 4$. The height of the node embeddings 1102 may indicate the number of nodes in the input graph 1101, which is 4. The width of the node embeddings 1102 may indicate the feature dimension, which is 3. The norm matrix 1103 includes four zero elements, which are represented by boxes with a dotted pattern in FIG. 11.

The node embedding 1102 and norm matrix 1103 are input into a node padding layer 1120. The node padding layer 1120 also receives a parameter n, indicating the number of additional nodes to be added to add to the node embeddings 1102 and norm matrix 1103. In the example shown in FIG. 11, n = 2. A padded embeddings 1104 is generated from padding the node embeddings 1102. The spatial shape of the padded embeddings 1104 is $3 \times 4$, as two extra nodes are added. The two bottom rows in the padded embeddings 1104 represent masked nodes 1106, i.e., the two extra nodes. The values in the two bottom rows are zero elements. A padded norm matrix 1105 is generated from padding the norm matrix 1103. The spatial shape of the padded norm matrix 1105 1104 is $6 \times 6$, as two extra nodes are added. The two bottom rows and the two right columns in the padded norm matrix 1105, which corresponds to the two extra nodes, include zero elements. The zero elements in the padded embeddings 1104 and the padded norm matrix 1105 are represented by boxes with a dotted pattern in FIG. 11. In some embodiments, the graph processing layer 1110 and node padding layer 1120 may be executed by a CPU.

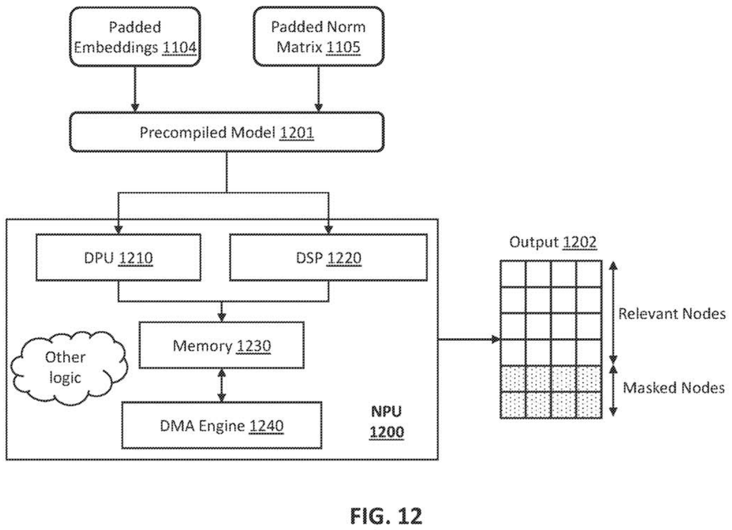

FIG. 12 illustrates GNN execution on an NPU 1200 based on node padding, in accordance with various embodiments. An example of the NPU 1200 may be the NPU 900 in FIG. 9. As shown in FIG. 12, the padded embeddings 1104 and padded norm matrix 1105 from FIG. 11 are used to generate a precompiled model 1201, e.g., by a compiler running on the CPU. The precompiled model 1201 is provided to the NPU 1200. A part of the precompiled model 1201is executed by a DPU 1210 in the NPU 1200, and the rest of the precompiled model 1201 is executed by a DSP 1220 in the NPU 1200. An example of the DPU 1210 may be the DPU 950 in FIG. 9. An example of the DSP 1220 may be the DSP 940 in FIG. 9. The NPU 1200 also has a memory 1230, which may be a local memory (e.g., the local memory 930 in FIG. 9), and a DMA engine 1240. An example of the DMA engine 1240 may be the DMA engine 920 in FIG. 9. The NPU 1200 produces an output 1202, which is a matrix. The space shape of the matrix is $6 \times 4$, which represents the features of 6 nodes, including four relevant nodes and two masked nodes. The two bottom rows of the matrix represent features of the masked nodes, and values in these rows may be zeros. The values in the top four rows of the matrix may represent the features of the four relevant nodes that are predicted by the GNN model.

In some embodiments, real-time graphs may undergo structural changes with nodes and edges being added or removed dynamically. Currently available NPUs usually support static input shapes, as models are precompiled to match a fixed shape, with optimizations like tiling based on that specific configuration. This limitation typically requires recompilation when the input graph shape changes. FIGS. 11 and 12 shows a node padding approach named "GrAd + NodePad." Dynamic input graph support for GNNs can be achieved via node padding. This approach can apply zero padding to the input features and utilizes a "norm" matrix (mask), precomputed on the CPU, which is then fed into the main GNN computation on the NPU. The node padding approach can facilitate compilation of the model with a higher node capacity than immediately needed. A GNN with GraphConv layers can handle a time-varying input graph on the NPU. For smaller graphs, embeddings for unused nodes may be zero-padded, while absent edges may be represented by zeros in the adjacency matrix, following the conventional interpretation of "0" as no edge and "1" as an active connection. This node padding strategy can minimize the need for frequent recompilation and eliminate the need to store multiple precompiled model versions for different graph sizes. By dynamically updating the mask at runtime, this approach can allow the GNN to efficiently adapt to evolving graph structures, significantly improving performance and energy efficiency by reducing the overhead tied to model recompilation.

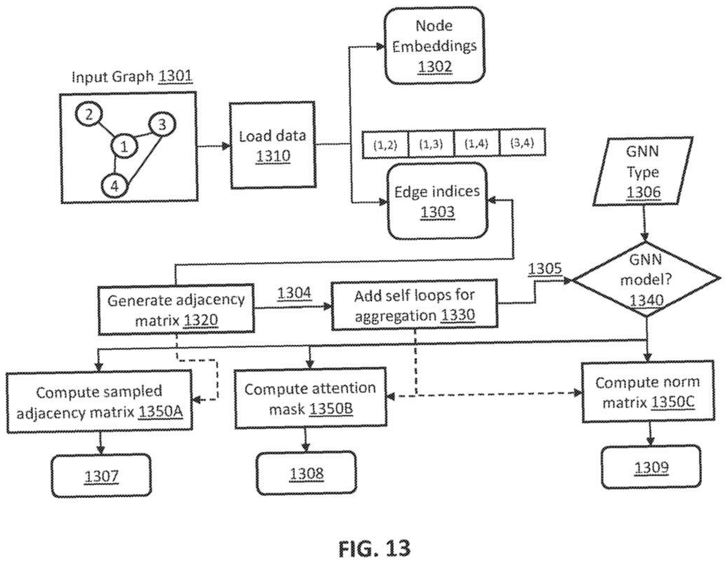

FIG. 13 illustrates graph preprocessing on a CPU, in accordance with various embodiments. FIG. 13 shows GraphSplit, a technology for enabling partitioned GNN inference between CPU and NPU to minimize inference latency. The NPU can be optimized to handle tasks that involve extensive data parallelism, making them ideal for operations like matrix multiplications in neural networks. Many NPUs are not as efficient for control-heavy tasks that require frequent decision-making steps. CPUs, on the other hand, usually excel at these control-intensive tasks, using techniques like predictive execution and out-of-order processing to maximize instruction-level parallelism.

Given these contrasting strengths, it may be preferred to offload all control-heavy tasks during GNN inference, such as computing initial masks for aggregation or calculating intermediate attention scores, to the CPU. However, when control-flow tasks have a Read-after-Write (RAW) dependency on previous data-parallel tasks, the data needs to be transferred to the CPU, creating substantial communication overhead. To overcome this, an offline profiling phase during model calibration is added. In this phase, a cost model is built to measure real-time latencies of various operations on both the CPU and NPU. This cost model also factors in the overhead from data transfer and communication between the CPU and NPU. Using this information, the most effective partition points can be identified to minimize communication and latency.

As shown in FIG. 13, an input graph 1301 is loaded in Step 1310 and converted to node embeddings 1302 and edge indices 1303. The node embeddings 1302 are represented by a matrix, the spatial shape of which is 3 $\times$ 4. The height of the matrix indicates the number of nodes in the input graph 1301, which is 4. The width of the matrix indicates the feature dimension which is 3. The edge indices 1303 indicate the edges in the input graph 1301. The edge indices 1303 may be represented by a vector, each element in the vector represents an edge and indicates the indices of the nodes of the edge.

The edge indices 1303 are used to create an adjacency matrix 1304 in Step 1320. The adjacency matrix 1304 is added with self loops for aggregation in Step 1330, which generates a matrix 1305. In an example, the adjacency matrix 1304 may be:

$$\begin{bmatrix} 0 & 1 & 1 & 1 \\ 1 & 0 & 0 & 0 \\ 1 & 0 & 0 & 1 \\ 1 & 0 & 1 & 0 \end{bmatrix}.$$

The matrix 1305 may be:

$$\begin{bmatrix} 1 & 1 & 1 & 1 \\ 1 & 1 & 0 & 0 \\ 1 & 0 & 1 & 1 \\ 1 & 0 & 1 & 1 \end{bmatrix}.$$

Step 1340 is then performed to determine the type of the GNN model using a parameter 1306 that indicates the type of the GNN model, which may be GCN, GAT, or SAGE. In embodiments where the GNN model is a SAGE, Step 1350A is performed to compute a sampled adjacency matrix 1307 using the adjacency matrix 1304. The sampled adjacency matrix 1307 may be an example of the adjacency matrix 1002C in FIG. 10C. In embodiments where the GNN model is a GAT, Step 1350B is performed to compute an attention mask 1308 using the matrix 1305. The attention mask 1308 may be an example of the mask 1003B in FIG. 10B. In embodiments where the GNN model is a GCN, Step 1350C is performed to compute a norm matrix 1309 using the matrix 1305. The norm matrix 1309 may be an example of the mask 1003A in FIG. 10A.

In some embodiments, the computation in Step 1350A may be denoted as:

$$\text{adj\_sampled}_{ij} = \begin{cases} \text{adj}_{ij} \text{ if } N_i < M \\ 0 \text{ if } N_i > M \end{cases}$$

The sampled adjacency matrix 1307 may be:

$$\begin{bmatrix} 0 & 1 & 0 & 1 \\ 1 & 0 & 0 & 0 \\ 1 & 0 & 0 & 1 \\ 1 & 0 & 1 & 0 \end{bmatrix}.$$

In some embodiments, the computation in Step 1350B may be denoted as:

$$\mathrm{mask}_{ij} = \begin{cases} 0 \ \mathrm{if} \ \mathrm{adj}_{ij} = 1 \\ -\infty \ \mathrm{if} \ \mathrm{adj}_{ij} = 0 \end{cases}$$

The sampled adjacency matrix 1307 may be:

$$\begin{bmatrix} 0 & 0 & 0 & 0 \\ 0 & 0 & -\infty & -\infty \\ 0 & -\infty & 0 & 0 \\ 0 & -\infty & 0 & 0 \end{bmatrix}.$$

In some embodiments, the computation in Step 1350C may be denoted as:

$$\mathrm{norm}_{ij} = \begin{cases} \dfrac{1}{\sqrt{d_i d_j}} \ \mathrm{if} \ \mathrm{adj}_{ij} = 1 \\ 0 \ \mathrm{if} \ \mathrm{adj}_{ij} = 0 \end{cases}$$

The sampled adjacency matrix 1307 may be:

$$\begin{bmatrix} \frac{1}{4} & \frac{1}{\sqrt{8}} & \frac{1}{\sqrt{12}} & \frac{1}{\sqrt{12}} \\ \frac{1}{\sqrt{8}} & \frac{1}{2} & 0 & 0 \\ \frac{1}{\sqrt{12}} & 0 & \frac{1}{3} & \frac{1}{3} \\ \frac{1}{\sqrt{12}} & 0 & \frac{1}{3} & \frac{1}{3} \end{bmatrix}.$$

The steps shown in FIG. 13 may be performed by a CPU. The sampled adjacency matrix 1307, attention mask 1308, and norm matrix 1309 may be used by an NPU to execute GNNs, for instance, as shown in FIGS. 10A-10C. The partitioning strategy can be designed to play to the strengths of each processing unit. In some embodiments, control-flow tasks, which require complex decision-making, are assigned to the CPU. Computationally heavy, data-parallel tasks like matrix multiplications are sent to the NPU. This distribution, which is based on the characteristics of the different types of processing units, can boost graph processing performance by reducing the need for frequent data exchanges. For example, offloading initial input preprocessing to the CPU would require minimal communication with the NPU, resulting in better performance. The partitioned inference setup for models like GCN, GAT, and GraphSAGE can effectively balance workload between the CPU and NPU. In some embodiments, control-heavy operations residing deep in the GNNs may be handled on the DSP within the NPU, achieving efficient task execution and reducing latency across the entire model.

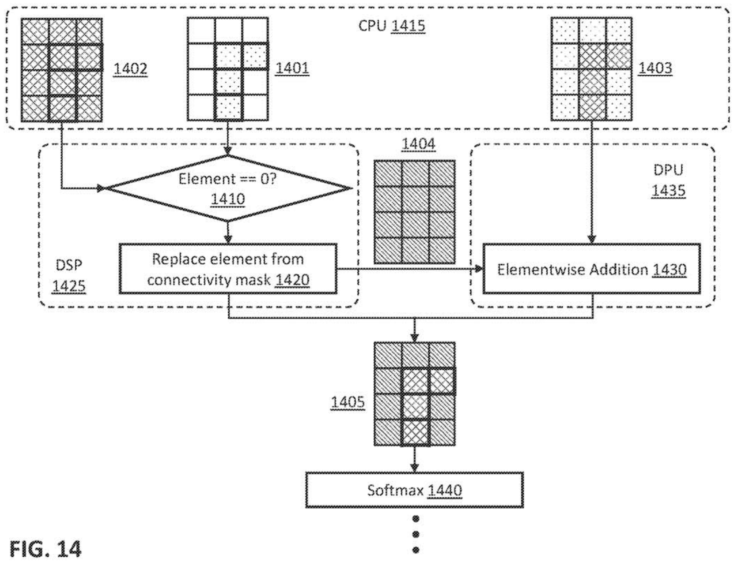

FIG. 14 illustrates GAT execution with control-intensive operations on a DPU, in accordance with various embodiments. FIG. 14 shows a baseline implementation of computing masked intermediate attention scores on a DSP 1425 and an optimized implementation of computing masked intermediate attention scores on a DPU 1435. FIG. 14 illustrates using EffOp, an approach for efficient execution of control-heavy operations on NPU, to optimize control-heavy operations within a GAT model. As described above, NPUs are primarily equipped with data-parallel MAC units that can be arranged to handle intensive, parallelized tasks efficiently. This high-performance array can be implemented on a DPU 1435, an example of which may be the DPU 950 in FIG. 9. The DPU 1435 may be well-suited for operations like MatMul operations, which are fundamental to many neural network computations. Control-heavy tasks-such as those involving conditional logic, selection, or gathering operations-may be assigned to a DSP 1425 in the NPU. An example of the DSP 1425 may be the DSP 940 in FIG. 9. The DSP 1425 may be specifically designed for control-heavy tasks. The DSP 1425 may operate at a slower rate than the DPU 1435, which can create bottlenecks and increase overall latency, especially in deep, sequential sections of GNNs.

To address this limitation, control-heavy operations in GAT execution are converted into equivalent data-parallel tasks in the embodiments of FIG. 14 so that these tasks can be executed on the faster DPU rather than the DSP. The core idea is to restructure sequential tasks, such as select, gather, and nonlinear activations, so that they can be processed as simple, elementwise operations on the DPU. By redefining these tasks using operations like multiplication and addition, combined with precomputed masks, it can transform inherently sequential processes into parallel-friendly ones. This allows the DPU to handle tasks that would traditionally rely on the slower DSP, reducing the need for sequential processing and, consequently, lowering overall execution time.

In the example shown in FIG. 14, a CPU 1415 computes an adjacency matrix 1401, a connectivity mask 1402, and a mask 1403. These three matrices all have a spatial shape of $4 \times 4$. The adjacency matrix 1401 includes 12 ones, which are represented by 12 blank boxes in FIG. 14, and 4 zeros, which are represented by 4 boxes with a dotted pattern in FIG. 14. The connectivity mask 1402 includes 16 $-\infty$ values, which are represented by 16 boxes with a diamond grid pattern in FIG. 14. The mask 1403 includes 12 zeros, which are represented by 12 boxes with the dotted pattern in FIG. 14, and 4 $-\infty$ values, which are represented by 4 boxes with the diamond grid pattern in FIG. 14. The adjacency matrix 1401 and connectivity mask 1402 are provided to the DSP 1425. The mask 1403 is provided to the DPU 1435.

The DSP 1425 performs Step 1410 and Step 1420. In Step 1410, the DSP 1425 determines whether each element in the adjacency matrix 1401 is zero. In Step 1420, the DSP 1425 replaces an element from the connectivity mask 1402 with a corresponding element from an intermediate attention matrix 1404 when the corresponding element from the adjacency matrix 1401 is zero. When an element from the adjacency matrix 1401 is not zero, the DSP 1425 may keep the corresponding element from the connectivity mask 1402 as is. The intermediate attention matrix 1404 includes intermediate attention scores, which may have various values represented by boxes with diagonal stripes. The intermediate attention matrix 1404 may be generated at an attention layer of the GAT from node embeddings. Step 1420 produces a masked intermediate attention matrix 1405, which has the 4 -∞ values from the connectivity mask 1402, and the positions of the 4 -∞ values are determined by the positions of the 4 zeros in the adjacency matrix 1401. The implementation of computing the masked intermediate attention matrix 1405 on the DSP 1425 by using the adjacency matrix 1401 and mask 1403 may be a baseline GAT implementation.

The GAT execution can be optimized by moving the computation of the masked intermediate attention matrix 1405 to the DPU 1435. As shown in FIG. 14, the DPU 1435 performs Step 1430, in which the DPU 1435 performs an elementwise addition on the mask 1403 and the intermediate attention matrix 1404. The result of the elementwise addition is also the masked intermediate attention matrix 1405. Compared with Step 1410 and Step 1420, Step 1430 by the DPU 1435 can be more efficient. Also, one mask matrix (i.e., the mask 1403) is used as opposed to two matrices (i.e., the adjacency matrix 1401 and connectivity mask 1402).

In Step 1440, a SoftMax operation is performed on the masked intermediate attention matrix 1405. The SoftMax operation may also be performed by the DPU 1435. Further computation may be performed to finish the GAT execution.

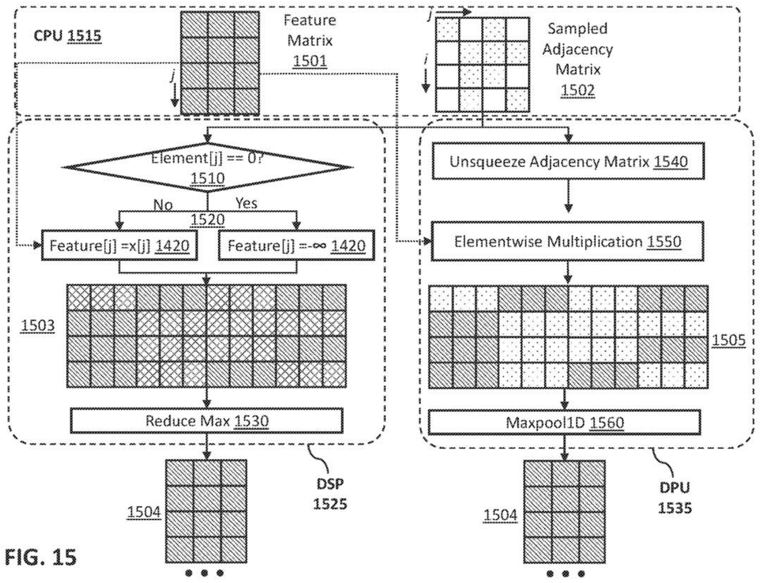

FIG. 15 illustrates GraphSAGE execution with control-intensive operations on a DPU 1535, in accordance with various embodiments. FIG. 15 shows a baseline implementation of computing aggregated neighborhood features on a DSP 1525 and an optimized implementation of computing aggregated neighborhood features on a DPU 1535. In the example shown in FIG. 15, a CPU 1515 computes a feature matrix 1501 and a sampled adjacency matrix 1502. The feature matrix 1501 may represent node features and may include various values, which are represented by boxes with a dotted pattern in FIG. 15. The spatial shape of the feature matrix 1501 is 3 × 4. The spatial shape of the sampled adjacency matrix 1502 is 4 × 4. The sampled adjacency matrix 1502 includes 7 ones, which are represented by 7 blank boxes in FIG. 15, and 9 zeros, which are represented by 9 dotted boxes in FIG. 15.

With the baseline implementation, the DSP 1525 performs Step 1510 and Step 1520. In Step 1510, the DSP 1525 determines whether each element from the sampled adjacency matrix 1502 is zero. In Step 1520, the DSP 1525 generates a new matrix 1503 based on the determination made in Step 1510 and values of elements from the feature matrix 1501. The spatial shape of the matrix 1503 is 12 × 4. The matrix 1503 includes four subtensors, the spatial shape of each is 3 × 4. In some embodiments, each subtensor corresponding to a row in the sampled adjacency matrix 1502. Row index of the sampled adjacency matrix 1502 is denoted as i. Column index of the sampled adjacency matrix 1502 is denoted as j. j is also row index of the feature matrix 1501. The first subtensor of the matrix 1503 may be generated based on the first row of the sampled adjacency matrix 1502. For instance, the DSP 1525 determines, in Step 1520, whether the first element in the first row of the sampled adjacency matrix 1502 is zero. As this element is zero in the example shown in FIG. 15, the DSP 1525 determines that the first row of the first subtensor of the matrix 1503 has three -∞ values. As the second element in the first row of the sampled adjacency matrix 1502 is not zero, the DSP 1525 determines that the first row of the second subtensor of the matrix 1503 has the same values as the second row of the feature matrix 1501. As the third element in the first row of the sampled adjacency matrix 1502 is zero, the DSP 1525 determines that the first row of the third subtensor of the matrix 1503 has three -∞ values. As the fourth element in the first row of the sampled adjacency matrix 1502 is not zero, the DSP 1525 determines that the first row of the third subtensor of the matrix 1503 has the same values as the fourth row of the feature matrix 1501.

The DSP 1525 may further determine, in Step 1520, whether the first element in the second row of the sampled adjacency matrix 1502 is zero. As this element is not zero in the example shown in FIG. 15, the DSP 1525 determines that the second row of the first subtensor of the matrix 1503 has the same value as the first row of the feature matrix 1501. As the second, third, and fourth elements in the second row of the sampled adjacency matrix 1502 are all zero, the DSP 1525 determines that the second row of the second subtensor, third subtensor, and fourth subtensor of the matrix 1503 all have -∞ values.

Similarly, as the third row of the sampled adjacency matrix 1502 is <1, 0, 0, 1>, the third row of the first subtensor of the matrix 1503 has the same values as the first row of the feature matrix 1501, and the third row of the fourth subtensor of t he matrix 1503 has the same values as the fourth row of the feature matrix 1501. All the values in the third row of the second subtensor and third subtensor of the matrix 1503 are -∞. The fourth row of the sampled adjacency matrix 1502 is <1, 0, 1, 0>. Accordingly, the fourth row of the first subtensor of the matrix 1503 has the same values as the first row of the feature matrix 1501, and the fourth row of the third subtensor of the matrix 1503 has the same values as the third row of the feature matrix 1501. All the values in the fourth row of the second subtensor and fourth subtensor of the matrix 1503 are -∞.

After the he matrix 1503 is computed, the DSP 1525 performs a reduce max operation in Step 1530 and produces a matrix 1504. The matrix 1504 represents aggregated neighborhood features.

With the optimized implementation, the computation of the matrix 1504 is done by the DPU 1535. The DPU 1535 unsqueezes the sampled adjacency matrix 1502 in Step 1540. Then the DPU 1535 performs an elementwise multiplication on the feature matrix 1501 and the matrix produced in Step 1540, the result of which is a matrix 1505. The matrix 1505 has the same spatial shape as the he matrix 1503. The elements having $-\infty$ values in the he matrix 1503 are zeros in the matrix 1505. The other elements may have the same value. Further, the DPU 1535 performs a 1D maxpool operation on the matrix 1505 and produces the matrix 1504.

For the purpose of illustration and simplicity, all zero values are represented by dotted boxes having dotted patterns, all $-\infty$ value are represented by diamond grid boxes, all one values are represented by blank boxes, and feature-related values (which may be various values) are represented by boxes with diagonal stripes in FIGS. 14 and 15.

EffOp can be particularly beneficial for operations found in GAT (as shown in FIG. 14) and Graph-SAGE (as shown in FIG. 15). In these cases, tasks that would typically involve complex control logic are optimized to leverage the DPU's strengths, converting them into matrix and elementwise operations that are easily parallelized. GraphConv layers, on the other hand, are naturally aligned with matrix multiplication tasks and do not require additional reconfiguration, as they lack the type of internal control-heavy operations seen in GAT and GraphSAGE models.

This reallocation of tasks to the DPU takes full advantage of its speed and parallelism, resulting in a significant reduction in inference latency. By minimizing reliance on sequential control flows and maximizing the DPU's data-parallel efficiency, this approach can enhance both computational performance and energy efficiency. This technique can capitalize on the DPU's high throughput while maintaining the functionality of the GNN, making it a powerful solution for real-time applications where reduced latency and optimized resource use are crucial.

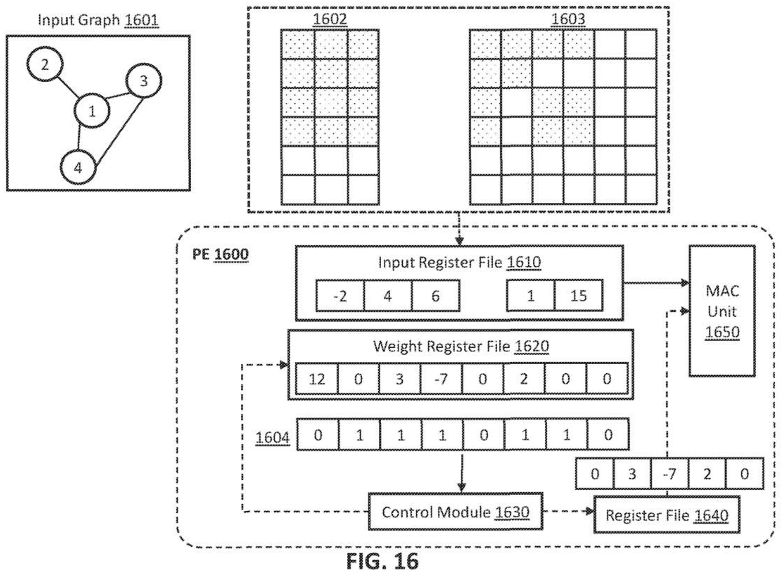

FIG. 16 illustrates exploiting input graph sparsity for faster execution, in accordance with various embodiments. For the purpose of illustration and simplicity, the GNN has an input graph 1601, which includes four nodes and four edges as shown in FIG. 16. The input embedding is padded to produce a padded embedding matrix 1602, the spatial shape of which is $3 \times 6$. The first four rows in the padded embedding matrix 1602 represent input embeddings, and the other two rows are added in the padding process. The elements in these padded rows may be zeros. Also a padded norm matrix 1603 is generated. The spatial shape of the padded norm matrix 1603 is $6 \times 6$. For the purpose of illustration, zeros are represented by blank boxes in FIG. 16, and dotted boxes represent various values. The padded norm matrix 1603 may be saved or used as internal parameters of the GNN.

A PE 1600 may be used to perform at least part of a MatMul operation on the padded embedding matrix 1602 and padded norm matrix 1603. Elements from the padded embedding matrix 1602 may be stored in an input register file 1610 of the PE 1600. Elements from the padded norm matrix 1603 may be stored in a weight register file 1620 of the PE 1600. In some embodiments, the input register file 1610 may store sparse data, meaning zeros are not stored. The weight register file 1620 may store dense data, meaning nonzero values and zeros are both stored. A sparsity bitmap 1604 may be used to control data loading. As shown in FIG. 16, the sparsity bitmap 1604 is provided to a control module 1630 of the PE 1600. The control module 1630 may have a sparsity logic and may load data from the weight register file 1620 into a register file 1640 based on the sparsity bitmap 1604. The sparsity bitmap 1604 may have the same dimension as the weight vector stored in the weight register file 1620. Each element in the sparsity bitmap 1604 may correspond to a weight in the weight vector and indicate whether the weight is zero or not. When an element in the sparsity bitmap 1604 is zero, the control module 1630 does not load the corresponding weight. When an element in the sparsity bitmap 1604 is one, the control module 1630 loads the corresponding weight to the register file 1640. The register file 1640 may be a dense register file that stores dense data. The dense data in the input register file 1610 and register file 1640 are loaded to an MAC unit 1650 of the PE 1600. The MAC unit 1650 may include at least one multiplier and at least one adder. The MAC unit 1650 may perform one or more MAC operations on the dense data. The PE 1600 may be a PE in a DPU, e.g., the DPUs described above. In some embodiments, a PE may include multiple MAC units.

FIG. 16 shows GraSp, a technique that enables activation sparsity exploitation for better GNN performance. In the context of GNN optimization on NPUs, activation sparsity can offer a powerful mechanism to significantly boost performance by skipping unnecessary calculations. Given that input graphs are often highly sparse, with up to 99% of values being zero, this technique can leverage this sparsity to optimize both memory usage and computational efficiency. The adjacency matrix in real-world graphs typically exhibits this extreme sparsity, containing many zero entries where no direct connection exists between nodes. By capitalizing on this inherent sparsity, NPUs can streamline computations by skipping over zero values, reducing the workload without impacting the accuracy of the model's inference.

To efficiently manage these sparse values, this technique can utilize a storage format known as Zero Value Compression (ZVC). In this approach, the nonzero values in the input graphs are stored explicitly, while the zero values are omitted, allowing the system to allocate memory and computational resources more effectively. For GraSp implementation, sparsity bitmaps may be used alongside the compressed data to denote the locations of nonzero values within the matrix. This bitmap can act as a guide, directing the NPU to focus on meaningful data while bypassing the zero entries. By skipping the processing of zeros, GraSp can drastically reduce memory access frequency, cut down on data traffic, and save on storage-all of which contribute to faster and more efficient inference.

**Error! Reference source not found.FIG.** 16 shows how sparsity bitmaps are integrated within the NPU's processing pipeline to skip computations involving zero values. When the NPU encounters a sparse adjacency matrix or node embedding in ZVC form, it can reference the sparsity bitmap to identify positions of nonzero elements and directly performs computations on these values alone. This method can not only minimize redundant memory usage but also reduce the need for extensive memory transfers, thereby improving the NPU's overall energy efficiency. This technique can achieve better throughput and latency. By combining activation sparsity and ZVC, GraSp can enable high performance, especially in resource-limited environments. The reduced computation load and memory savings allow for more efficient hardware utilization, delivering a significant increase in throughput and making this approach particularly advantageous in power- and memory-constrained scenarios that require real-time performance.

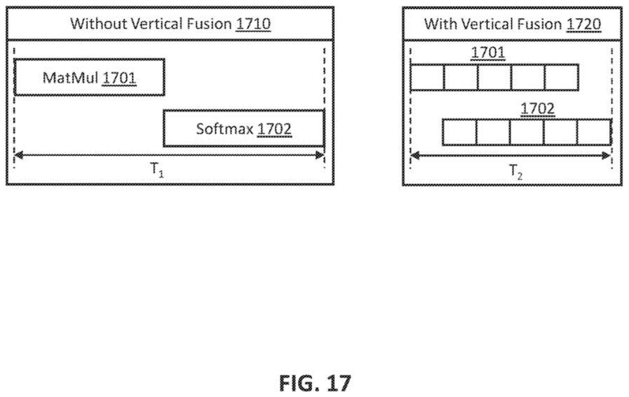

FIG. 17 illustrates vertical fusion of operations in GNN execution, in accordance with various embodiments. For the purpose of illustration, FIG. 17 shows a MatMul operation 1701 and a SoftMax operation 1702. In some embodiments, the MatMul operation 1701 is implemented on a DPU, and the SoftMax operation 1702 is implemented on a DSP. The SoftMax operation 1702 may be performed using data computed from the MatMul operation 1701. In some embodiments, the DPU and DSP may be controlled by the same clock signal.

In an implementation 1710, there is no vertical fusion of the MatMul operation 1701 and SoftMax operation 1702. The SoftMax operation 1702 starts after the MatMul operation 1701 is complete. The total time for finishing the two operations, which is shown as $T_1$ in FIG. 17, equals the time for executing the MatMul operation 1701 plus the time for executing the SoftMax operation 1702. In a different implementation 1720, there is vertical fusion of the two operations. Instead of waiting for the MatMul operation 1701 is complete, the DSP starts the SoftMax operation 1702 while the DPU is performing the MatMul operation 1701. For instance, the SoftMax operation 1702 can be started after the DPU computes sufficient input to the SoftMax operation 1702 by finishing a portion of the MatMul operation 1701. With this DPU-DSP pipeline, the total time for finishing the two operations is reduced from $T_1$ to $T_2$ and therefore the efficiency of the NPU is improved.

FIG. 17 shows VerGe, a technique enabling vertical fusion optimization for concurrent execution. This vertical fusion optimization technique can enable efficient overlap of operations between the DPU and DSP units in NPUs. In GNNs, each layer is typically followed by an activation function. For instance, the final linear layer is often followed by a SoftMax function. This vertical fusion approach can leverage this pattern so that linear transformations, MatMul, and elementwise operations can be executed by the high-throughput DPU, while functions like SoftMax are simultaneously assigned to the DSP unit, which handles control-heavy tasks. In some embodiments, as each block of data is processed by the DPU (with block size determined by the NPU compiler), it can be immediately handed off to the DSP unit to compute the subsequent operation, such as an activation function. By pipelining tasks this way, the DPU and DSP can work in tandem: the DPU continues processing new data for linear and MatMul operations while the DSP simultaneously handles activation functions like SoftMax on previous blocks. This concurrent execution can reduce overall inference latency and enhances throughput, allowing the NPU to achieve superior performance without requiring hardware changes. FIG. 17 how vertical fusion reduces the end-to-end latency of a MatMul-SoftMax block by overlapping execution through the independent compute units (DPU and DSP) in the NPU. The result is a streamlined inference process that maximizes resource utilization within the NPU, significantly boosting speed and efficiency. This method also makes it possible to capitalize on the distinct strengths of the DPU and DSP, enhancing the NPU's capacity to handle complex neural network workloads effectively.

FIG. 18 illustrates an NPU 1800 with integer and floating-point data paths, in accordance with various embodiments. Quantization techniques can be used to improve NPU performance per watt. This disclosure introduces a quantization technique (QuantGr) that reduces precision to improve performance while maintaining model accuracy. NPUs, typically designed with low-precision capabilities, can support both integer data paths (e.g., INT8 data paths) and floating-point data paths (e.g., FP16 data paths), allowing for notable performance gains. Integer precision offers advantages, such as 2X reductions in memory storage, data transfer, and power consumption compared to floating-point. By configuring the quantization parameters carefully, such as setting an optimal zero point and scale, QuantGr can achieve competitive accuracy at lower precision. Leveraging the NPU's support for static quantization of activations and weights, this approach unlocks higher efficiency for GNNs, making it well-suited for performance-sensitive, resource-limited environments.

In some embodiments, QuantGr uses symmetric, static quantization, meaning both weights and activations are quantized around a zero point, with equal scaling factors for positive and negative values. Static quantization, which precomputes scaling and zero-point parameters during model calibration, enables consistent and faster inference, as these values remain fixed throughout execution. Symmetric quantization simplifies processing by ensuring consistent scaling and compatibility across all hardware layers, minimizing conversion overheads.

The NPU 1800 may be an example of the NPU 900 in FIG. 9. As shown in FIG. 18, the NPU 1800 includes a DPU 1810, a memory 1820, and a DSP 1830. Both the DPU 1810 and DSP 1830 can access the memory 1820, including writing data into the memory 1820 and reading data from the memory 1820. The NPU 1800 may include additional components not shown in FIG. 18.

The DPU 1810 includes an IDU 1811 with an activation reader 1812 and a weight reader 1813, a processing engine 1814, a post-processing engine 1815, and an ODU 1816. The IDU 1811 may load data from the memory 1820. For instance, the activation reader 1812 may load activations from the memory 1820. The weight reader 1813 may load weights from the memory 1820. The data may be input data of a DNN layer, such as a convolutional layer or MatMul layer. In some embodiments (e.g., embodiments where a GNN layer is executed based on quantization), the IDU 1811 may load quantized values for the GNN layer. The IDU 1811 may also load quantization parameters, such as scale and zero point. The IDU 1811 may load the quantized values into the processing engine 1814 and load the scale and zero point into the post-processing engine 1815.

The processing engine 1814 performs neural network operations in the GNN layer on the quantized values. The neural network operations may be convolutions, MatMul operations, and so on. In some embodiments, the processing engine 1814 may include a PE array. For the purpose of illustration, the PE array includes 16 columns and 16 rows. In other examples, the PE array may include a different number of columns or rows. The IDU 1811 may also load data (e.g., scales, zero points, etc.) into the post-processing engine 1815 for dequantizing values computed by the processing engine 1814. The data (e.g., 32-bit partial sums) computed by the post-processing engine 1815 may be drained by the ODU 1816 and written into the memory 1820.

The DSP 1830 may read data computed by the DPU 1810 from the memory 1820 and perform further computation on the data. For instance, the DSP 1830 may perform a SoftMax operation on result of a MatMul operation performed by the DPU 1810. In some embodiments, a part of the operation by the DSP 1830 may be performed in parallel with part of the operation by the processing engine 1814. In some embodiments, the operation by the DSP 1830 starts before the DPU 1810 finishes its operation. The pipelining may be done potentially in fine granular batches in an interleaved manner. The parallel performance of the operations may require splitting the computation into multiple workloads that may incur additional overhead. The DSP 1830 may also perform control-heavy operations in the GNN layer.

FIG. 19 illustrates an example sparse cell 1900, in accordance with various embodiments. The sparse cell 1900 may be a processing cell in a processing engine, e.g., the processing engine 970 in FIG. 9. The sparse cell 1900 includes 16 MAC units 1910 (individually referred to as "MAC unit 1910"), which constitutes a MAC array having four rows and four columns. The MAC array has a spatial shape of 4x4, meaning the height of the MAC array is four and the width of the MAC array is also 19. The sparse cell 1900 also includes 16 weight register files 1920 (individually referred to as "weight register file 1920"), 16 activation register files 1930 (individually referred to as "activation register file 1930"), four row buffers 1940 (individually referred to as "row buffer 1940"), and acceleration modules 1960 (individually referred to as "acceleration module 1960"). In other embodiments, the sparse cell 1900 may include fewer, more, or different components. For example, the sparse cell 1900 may include a different number of MAC units 1910, weight register files 1920, activation register files 1930, row buffers 1940, or acceleration modules 1960. As another example, the sparse cell 1900 may include column buffers in lieu of or in addition to the row buffers 1940. Also, the shape (e.g., the height or width) of the MAC array may be different.

The MAC units 1910 are configured to perform MAC operations. Each MAC unit 1910 may include one or more multipliers and one or more adders. A multiplier may multiply an activation with a weight at a time to compute a product. In some embodiments (e.g., embodiments where the MAC unit 1910 includes multiple multipliers), the multipliers may operate simultaneously to process multiple activation-weight pairs and compute multiple products in one cycle. An adder may accumulate products computed by the multipliers. Even though not shown in FIG. 19, the sparse cell may include an adder tree including a plurality of adder tiers. The first tier may receive outputs of a plurality of MAC units 1910. The number of adders in the first tier may be half of the number of the MAC units 1910, and each adder may accumulate the outputs of two MAC units 1910. The second tier may receive outputs of adders in the first tier. The number of adders in the second tier may be half of the number of adders in the first tier, and each adder in the second tier may accumulate the outputs of two adders in the first tier. The adder tree may include one or more other tiers. The last tier may include a single adder that accumulates outputs of adders in the second last tier to compute a partial sum of the sparse cell 1900.

The weight register files 1920 store weights to be processed in MAC operations. In the embodiments of FIG. 19, four weight register files 1920 are grouped into a storage set that stores data to be used by a column of MAC units 1910. There are four storage sets corresponding to the four columns of MAC units 1910. In some embodiments, a weight register file 1920 may correspond to a MAC unit 1910 and store data to be processed by the MAC unit. In some embodiments, all the 16 weight register files 1920 constitute a weight storage unit.

The activation register files 1930 stores activations to be processed in MAC operations. In the embodiments of FIG. 19, four activation register files 1930 are grouped into a storage set that stores data to be used by a row of MAC units 1910. There are four storage sets corresponding to the four rows of MAC units 1910. In some embodiments, an activation register file 1930 may correspond to a MAC unit 1910 and store data to be processed by the MAC unit. In some embodiments, all the 16 activation register files 1930 constitute an activation storage unit. The row buffers 1940 store outputs of the MAC units 1910. Each row buffer 1940 may drain outputs of a single row of MAC units 1910.

The acceleration module 1960 facilitates acceleration of computations in the sparse cell 1900 based on mixed formats of weights. In the embodiments of FIG. 19, each acceleration module 1960 may control acceleration of computations in a different MAC unit 1910. The number of acceleration modules 1960 in the sparse cell 1900 is the same as the number of MAC units 1910 in the sparse cell 1900. In other embodiments, an acceleration module 1960 may control acceleration in multiple MAC units 1910. As shown FIG. 19, each acceleration module 1960 includes a storage unit 1965 and a control logic 1967. The storage unit 1965 stores mixed-format maps. The control logic 1967 may control distributions of activations and weights stored from the weight register files 1920 and the activation register files 1930 to the MAC units 1910 based on mixed-format maps. In some embodiments, the control logic 1967 may distribute a weight operand and a corresponding activation operation to a MAC unit 1910 for an MAC operation. The weight operand may be a subblock (e.g., a column) of a weight block. All the weights in the weight operand may be in the same output channel and have the same spatial position, but the weights may be in different input channels from each other.

In some embodiments, a weight operand may include one or more uncompressed weight and one or more compressed weights. The control logic 1967 may distribute compressed weights to MAC units 1910 in a different manner from which the control logic 1967 distributes uncompressed weights. In some embodiments (e.g., embodiments in which the compressed weights are zeros), the control logic 1967 may select nonzero weights stored in the weight register files 1920 based on the mixed-format map and distribute these nonzero weights to the MAC unit 1910 for computation. The control logic 1967 may also distribute activations, which correspond to the nonzero weights, to the MAC unit 1910 from in the activation register files 1930. The control logic 1967 may ignore zero weights and activations corresponding the zero weights so that these weights and activations can be skipped from computation.

In other embodiments (e.g., embodiments in which the compressed weights have a lower precision than the uncompressed weights), the control logic 1967 may distribute both compressed weights and uncompressed weights to the MAC unit 1910 but in different manners. For example, the control logic 1967 may distribute one compressed weight to the MAC unit 1910 for one computation cycle of the MAC unit 1910 but distribute one uncompressed weight to the MAC unit 1910 for multiple computation cycles of the MAC unit 1910. The MAC unit 1910 may have a multiplier that can compute a product of a compressed weight with its corresponding activation in one computation cycle. The multiplier may compute multiple products for an uncompressed weight. Each of these products may be a result of multiplying a portion of the uncompressed weight with the corresponding activation in one computation cycle. One or more of these products may be shifted and then accumulated with one or more other products to compute the product of the uncompressed weight and the activation. As another example, the control logic 1967 may distribute multiple compressed weights to the MAC unit 1910 for one computation cycle of the MAC unit 1910 but distribute one uncompressed weight to the MAC unit 1910 for one computation cycle of the MAC unit 1910. The MAC unit 1910 in this example may have multiple multipliers that can compute multiple products for an uncompressed weight in one operating cycle, in which each multiplier may multiply a portion of the uncompressed weight with the corresponding activation. Each multiplier may multiply a compressed weight with the corresponding activation in one compute cycle so that multiple multipliers can handle multiple uncompressed weights in one computation cycle.

As shown in FIG. 19, the sparse cell 1900 is associated with multiplexers (MUXs) 1903, 1904, 1905, and 1906. In other embodiments, the sparse cell 1900 may be associated with a different number of MUXs or other devices. The MUX 1903 facilitates loading weights, e.g., from the local memory 340, into the weight register files 1920. The MUX 1904 facilitates loading activations, e.g., from the local memory 340, into the activation register files 1930. The MUX 1905 facilitates loading mixed-format maps into the storage unit 1965. The MUX 1906 may be a drain MUX that can facilitate draining outputs of the MAC units 1910, e.g., to the local memory 340.

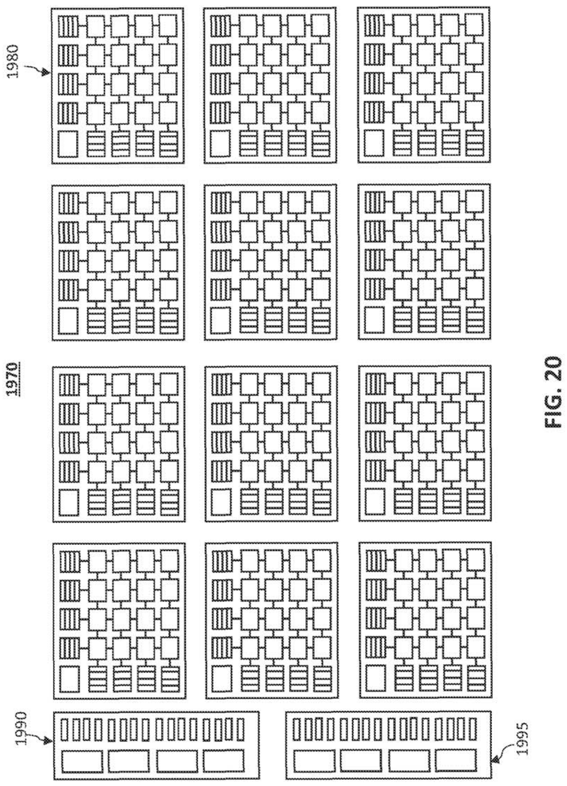

FIG. 20 illustrates a sparse cell array 1970, in accordance with various embodiments. The sparse cell array 1970 may be an example of the processing engine 970 in FIG. 9. In FIG. 20, the sparse cell array 1970 includes sparse cells 1980 (individually referred to as "sparse cell 1980") arranged in four columns and four rows, an activation memory 1990, and a weight memory 1995. In other embodiments, the sparse cell array 1970 may include fewer, more, or different components. For instance, the sparse cell array 1970 may include a different number of columns, rows, or sparse cells 1980.

Each sparse cell 1980 may perform accelerated MAC operations. MAC operations in the sparse cells 1980 may be accelerated based on mixed formats of weights. An embodiment of a sparse cell 1980 may be the sparse cell 1900 in FIG. 19. The activation memory 1990 stores activations, such as activations in input tensors of neural network operations. Activations may be loaded from the activation memory 1990 to sparse cells 1980, e.g., to activation register files. The weight memory 1995 stores weights, such as weights in filters of neural network operations. Weights may be loaded from the weight memory 1995 to sparse cells 1980, e.g., to weight register files. The activation memory 1990 or weight memory 1995 may be a buffer.

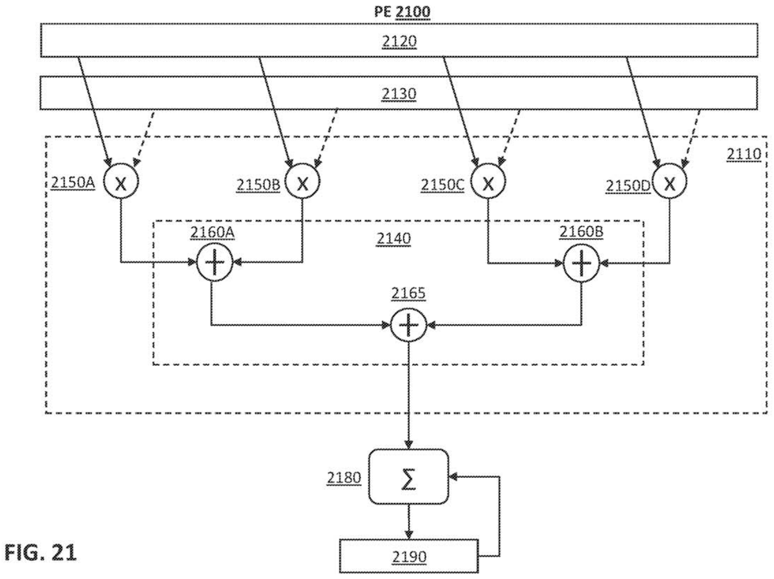

FIG. 21 illustrates an example PE 2100, in accordance with various embodiments. The PE may be an example of PEs in the processing engine 970. In FIG. 21, the PE 2100 includes an MAC unit 2110, an input storage unit 2120, a weight storage unit 2130, an accumulator 2180, and an output storage unit 2190. The MAC unit 2110 includes multipliers 2150A-D (collectively referred to as "multipliers 2150" or "multiplier 2150") and an adder tree 2140. The adder tree 2140 includes adders 2160A and 2160B and an adder 2165. In other embodiments, alternative configurations, different or additional components may be included in the PE 2100. For example, the PE 2100 may include more than one MAC unit. The MAC unit 2110 may include a different number of multipliers. The adder tree 2140 may include a different number of adders. Further, functionality attributed to a component of the PE 2100 may be accomplished by a different component included in the PE 2100, a different component included in a PE array where the PE 2100 is placed, or by a different system. The positions of the components of the PE 2100 in FIG. 21 are for the purpose of illustration only. Even though the positions of the components may reflect the direction of data flow in the PE 2100, the positions of the components in FIG. 21 do not necessarily represent physical positions of the components in the PE 2100.

The PE 2100 may perform sequential cycles of MAC operations. In a cycle of MAC operations, the PE 2100 may process multiple input operands and multiple weight operands, e.g., given the presence of multiple multipliers 2150 in the MAC unit 2110. Activations may be provided to the input storage unit 2120 and stored in the input storage unit 2120. In some embodiments, the input storage unit 2120 may store activations of up to four input operands in the cycle of MAC operations. Weights may be provided to the weight storage unit 2130 and stored in the weight storage unit 2130. The weight storage unit 2130 may store weights of up to four weight operands in the cycle of MAC operations. The multipliers 2150 may fetch activations and weights from the input storage unit 2120 and weight storage unit 2130 and compute products. In an example round, each multiplier 2150 receives an activation and a corresponding weight and outputs the product of the activation and the weight. In other cycles, the activations and weights may be reused by different multipliers 2150. The activations and weights from the input storage unit 2120 and weight storage unit 2130 may be reused more than once. In some embodiments, the activations or weights may be integer values. The multipliers 2150 may perform integer multiplications.

The adder tree 2140 receives dot products computed by the multiplier 2150 and accumulates the dot products. The adder 2160A receives products computed by the multipliers 2150A and 2150B and computes a first sum. The adder 2160B receives products computed by the multiplier 2150C and 2150D and computes a second sum. The adder 2165 receives the first sum and the second sum from the pipeline registers 2170A and 2170B and accumulates the sums to generate an output of the MAC unit 2110.

The output of the MAC unit 2110 is further provided to the accumulator 2180. The accumulator 2180 may accumulate the output of the MAC unit 2110 with a value stored in the output storage unit 2190. The value may be an output of another PE 2100, which has been sent to the PE 2100 and stored in the output storage unit 2190. The output of the accumulator 2180 can be stored in the output storage unit 2190. In some embodiments, the output of the accumulator 2180 may be a floating-point value.

FIG. 21 shows an INT8 data path. In other embodiments (e.g., embodiments where the PE 2100 performs computation on FP16 data), two multipliers 2150, as opposed to four, may be used in a computation cycle due to the higher data precision. The two products computed by the two multipliers may be provided to a single adder (e.g., the adder 2165) for computing a sum. In this example, INT8 precision can yield up to a 4X improvement in performance per watt over FP16. Furthermore, with minimal impact on model generalizability, precision can be reduced to 4 bits, delivering a 16X performance per watt boost-demonstrating the potential of low-precision execution to enhance NPU efficiency for GNN workloads.

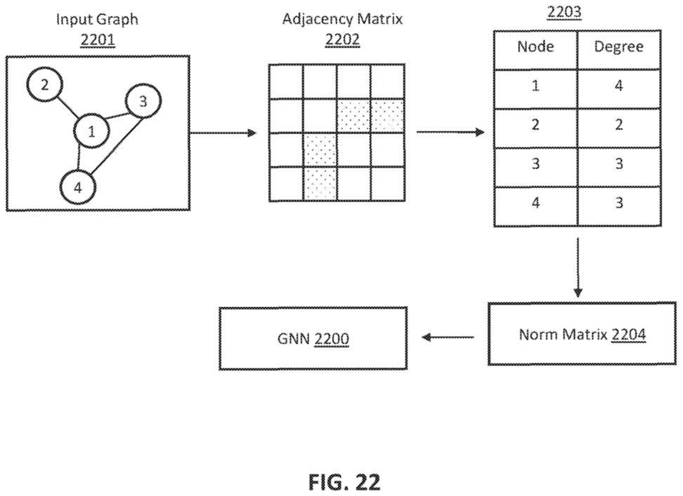

FIG. 22 illustrates streamlined computation for a GNN 2200 with GraphConv layers, in accordance with various embodiments. For the purpose of illustration, the GNN 2200 has an input graph 2201 in FIG. 22. The input graph 2201 has four nodes and four edges. An adjacency matrix 2202 is computed for the 2201, e.g., by a CPU. The adjacency matrix 2202 has ones, which are represented by blank boxes, and zeros, which are represented by dotted boxes. A table 2203 is generated. The table 2203 includes data indicate node degrees for all the four nodes in the input graph 2201. A norm matrix 2204 is computed based on the table 2203. In some embodiments, the norm matrix 2204 is computed using the following function:

$$\text{norm}_{ij} = \begin{cases} \dfrac{1}{\sqrt{d_i d_j}} & \text{if } \text{adj}_{ij} = 1 \\ 0 & \text{if } \text{adj}_{ij} = 0 \end{cases}$$

The norm matrix 2204 may be:

$$\begin{bmatrix} \frac{1}{4} & \frac{1}{\sqrt{8}} & \frac{1}{\sqrt{12}} & \frac{1}{\sqrt{12}} \\ \frac{1}{\sqrt{8}} & \frac{1}{2} & 0 & 0 \\ \frac{1}{\sqrt{12}} & 0 & \frac{1}{3} & \frac{1}{3} \\ \frac{1}{\sqrt{12}} & 0 & \frac{1}{3} & \frac{1}{3} \end{bmatrix}.$$

The norm matrix 2204 may be stored as internal parameters (e.g., weights) of the GNN. Values in the norm matrix 2204 are normalization factors. The normalization factors in the embodiments of FIG. 22 depend on the degrees of neighboring nodes, not on their specific features, including itself. Thus, the normalization factors can be precomputed. For instance, the normalization factors can be computed offline before the NPUs starts the execution of the GNN 2200. By exploiting the feature independence, these normalization factors can be computed once, storing them in a constant matrix. This allows the aggregation and normalization steps to be combined into a single matrix multiplication, streamlining execution.

This provides a streamlined approach (named PreG) tailored for GNNs that use GraphConv layers as core components. PreG can leverage a precomputed, constant normalization matrix to accelerate processing. Since GraphConv is foundational and commonly used in many advanced GNN architectures, this enhancement can offer broad applicability and efficiency gains.

This approach can align well with the NPU's architecture, as many NPUs are optimized for efficient matrix multiplication but not for division, which is typically handled by the slower DSP unit. Precomputing the normalization matrix on the CPU can convert the aggregation process into a simple matrix multiplication with node features, a task for which the NPU is highly optimized. By matching this process to the NPU's strengths, this method enhances execution efficiency, leading to marked performance improvements without requiring changes to the underlying accelerator.

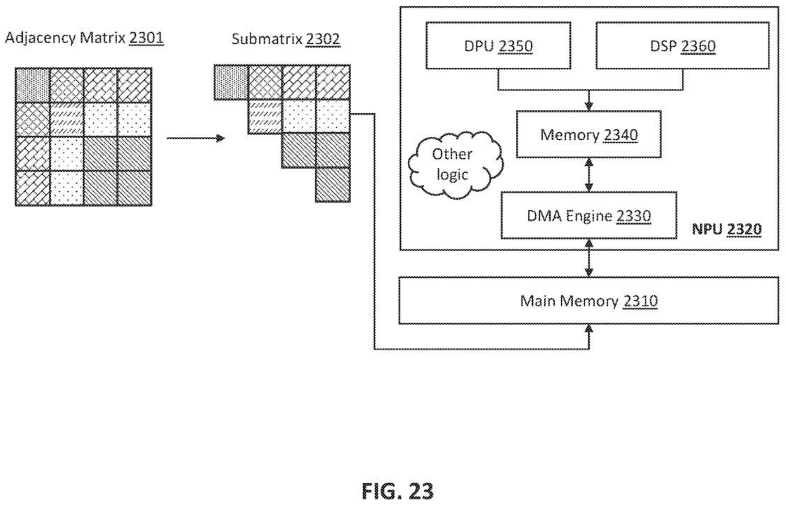

FIG. 23 illustrates adjacency matrix storage for graph convolution layers, in accordance with various embodiments. For the purpose of illustration, FIG. 23 shows a norm matrix 2301. The norm matrix 2301 has 16 normalization factors arranged in 4 rows and 4 columns. The 16 normalization factors have various values. Different values are prepared by different patterns in FIG. 23. The boxes with the same pattern represent normalization factors having the same value. As shown in FIG. 23, the norm matrix 2301 is symmetric along a diagonal axis. This symmetry is leveraged to reduce the amount of storage needed for the norm matrix 2301. For instance, a submatrix 2302 of the norm matrix 2301 is stored as opposed to the entire norm matrix 2301. The submatrix 2302 includes 10 normalization factors that are the upper half and diagonal entries. The submatrix 2302 is stored in a main memory 2310. The submatrix 2302 may be loaded into an NPU 2320 from the main memory 2310 through a DMA engine 2330. As the submatrix 2302 is smaller than the norm matrix 2301, the data transfer traffic between the main memory 2310 and NPU 2320 can be reduced. The DMA engine 2330 may write the submatrix 2302 into a local memory local memory 2340 of the NPU 2320. The submatrix 2302 may be reused for multiple GraphConv layers (e.g., all GraphConv layers) in the GNN that are executed using a DPU 2350 and a DSP 2360.

FIG. 23 demonstrates the portion of the normalization matrix stored in memory and illustrates how it is cached within the local memory 2340 of the NPU 2320. This technique can capitalize on the symmetry of the normalization matrix in GraphConvs, allowing half of the adjacency matrix and its diagonal elements to be stored while the other elements are bypassed. This optimization can effectively reduce memory complexity, translating to substantial savings in memory usage. Additionally, SymG can minimize memory traffic, especially during DMA transfers from DRAM to the NPU's local memory, which can be a bottleneck. Also, CacheG can cache the constant normalization matrix within the NPU's local memory and reuses it across all GraphConv layers, significantly reducing memory access overhead. This caching strategy can not only boost runtime efficiency but also help to lower inference latency, making the overall execution of GNNs on the NPU more streamlined and resource efficient.

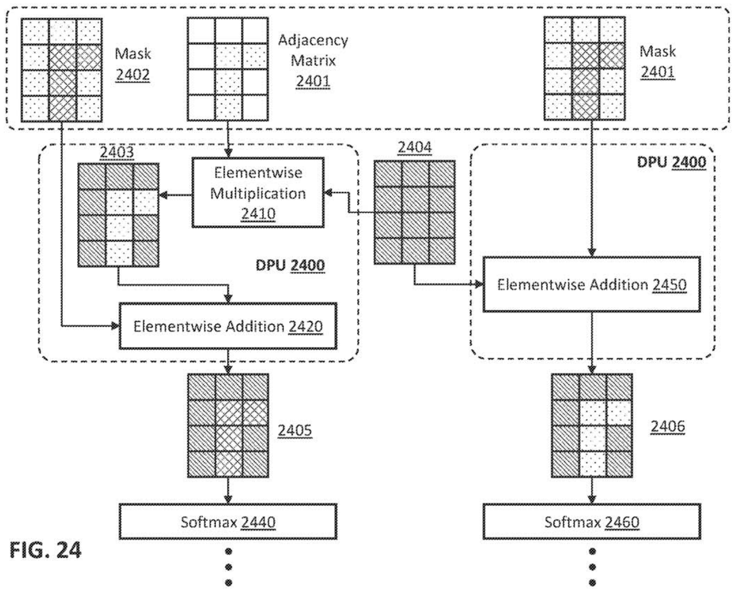

FIG. 24 illustrates an optimization of graph attention, in accordance with various embodiments. FIG. 24 shows two implementations of graph attention on a DPU 2400. In the first implementation, a mask 2401 and an adjacency matrix 2402 are input into the DPU 2400. The DPU 2400 performs an elementwise multiplication in Step 2410 on the adjacency matrix 2402 and an intermediate attention matrix 2403. The elementwise multiplication produces a new matrix 2404. Then the DPU 2400 performs an elementwise addition in Step 2420 on the intermediate attention matrix 2403 and mask 2401 and produces a matrix 2405. The matrix 2405 may include masked intermediate attention scores. The matrix 2405 is then be used to perform a SoftMax operation in Step 2440, which may be performed by a DSP. The attention scores in the matrix 2405 may be accurate attention scores.

In the second implementation, the DPU 2400 performs an elementwise addition in Step 2450 on the mask 2401 and intermediate attention matrix 2403 and produces a matrix 2406. The attention scores in the matrix 2406 may be approximated attention scores. The matrix 2406 is then be used to perform a SoftMax operation in Step 2460, which may be performed by a DSP. For the purpose of illustration, all the zero values are represented by dotted boxes in FIG. 24, all the -∞ values are represented by diamond grid boxes, and the boxes with diagonal stripes represent various values, e.g., attention scores, etc.

FIG. 24 shows a technique (named GrAx1) enabling optimizations for GNNs using graph attention through elimination of elementwise multiplication for intermediate attention score computation. The first implementation may compute accurate attention scores, while the second implantation may compute approximated attention scores. GNNs with Graph Attention (such as GAT) are usually well-regarded for their ability to generate attention maps that assign varying importance to nodes within a graph. However, these networks face significant computational challenges, particularly in managing non-existent edges. To prevent these edges from influencing the final attention values, they are typically masked by assigning them a large negative number before being processed through a SoftMax function. This masking step effectively ensures that attention coefficients for non-existent edges are rendered negligible during the aggregation phase.

GrAx1 may be focused on the operations carried out by the DPU. In traditional GAT implementations, an elementwise multiplication is performed between the attention map and the mask to eliminate the influence of non-existent edges. However, this multiplication is computationally intensive and not well-suited for the DPU. To mitigate this inefficiency, the patent proposes this novel approximation technique, GrAx1. Instead of multiplying the attention map by the mask, it directly adds a large negative value to the positions in the attention map that correspond to non-existent edges. This modification can effectively bypass the multiplication step, leading to a substantial reduction in computational burden on the DPU. As a result, throughput is increased without sacrificing the quality of the final attention map. By eliminating the unnecessary multiplications, this optimization enhances the hardware's efficiency in processing attention maps, ultimately improving the performance of GAT implementations on NPUs.

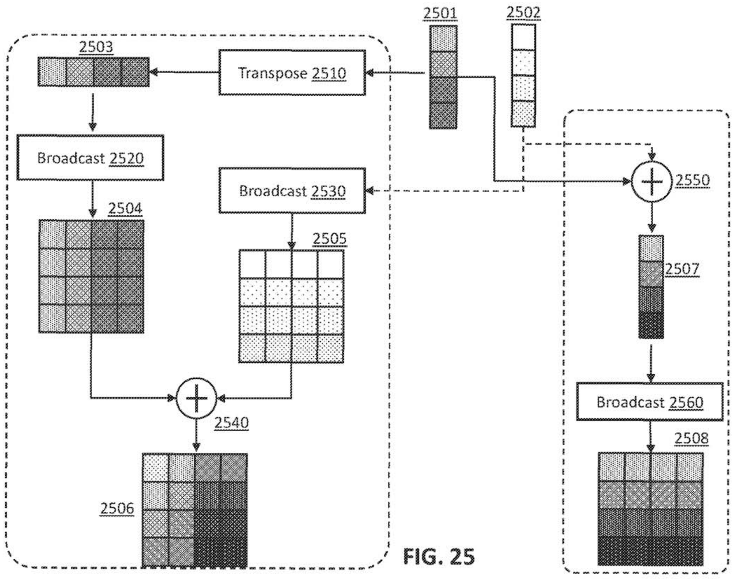

FIG. 25 illustrates another optimization of graph attention, in accordance with various embodiments. FIG. 25 shows two implementations for computing attention scores. The first implementation can compute accurate attention scores, while the second implementation can approximate attention scores with better performance. A score vector 2501 and a score vector 2502 are used for both implementations.

In the first implementation, the score vector 2501 is transposed in Step 2510 into a score vector 2503. The score vector 2503 is broadcasted to a matrix 2504 in Step 2520. The score vector 2502 is broadcasted to a matrix 2505 in Step 2530. The matrix 2504 and matrix 2505 are provided to a concatenator 2540, which may perform an elementwise addition on the matrix 2504 and matrix 2505. The concatenator 2540 produces a matrix 2506. Values in the matrix 2506 are accurate intermediate attention scores. The transpose, broadcast, and elementwise addition may be performed by a DPU.

In the second implementation, the score vector 2501 and score vector 2502 are provided to a concatenator 2550, which may perform an elementwise addition on the score vector 2501 and score vector 2502. The concatenator 2550 produces a vector 2507. The vector 2507 is broadcasted to a matrix 2508 in Step 2560. Values in the matrix 2508 are approximated intermediate attention scores.

FIG. 25 shows another technique (named GrAx2) for optimizations for GNNs using graph attention through replacement of broadcast-add operation on DPU. A significant bottleneck in GATs arises during the broadcast-add operation, which can be essential for calculating the intermediate attention map. In traditional implementations (such as the first implementation shown in FIG. 25), this operation typically requires adding the same value to multiple nodes, a process that involves broadcasting and transposing the data. This step can lead to inefficiencies when executed on the DPU, hindering overall performance.

To address this inefficiency, GrAx2 replaces the conventional broadcast-add operation with a more straightforward addition followed by broadcast. This approach can significantly reduce the computational intensity of the operation, allowing the DPU to execute it more quickly. By simplifying this process, the DPU can lower inference latency and allocate resources more effectively for other tasks. This optimization can not only enhance the speed of GAT computations but also contribute to improved overall efficiency in processing graphs on NPUs.

Optimizations for GNNs using SAGE layers can be achieved based on parallelization of neighborhood feature selection on DPU. Another technique (named GrAx3) can leverage the abundant data parallelism present in the DPU to optimize the computation for GNNs using the SAGE layers with a "max" aggregation strategy. Traditionally, the feature selection for each neighborhood in the SAGE layer is sequentially processed on the DSP, which can be slow and inefficient. GrAx3 replaces this sequential operation with a parallel elementwise multiplication using a mask on the DPU, effectively speeding up the computation by processing multiple features simultaneously. This parallelization reduces inference latency and boosts throughput, leading to significant improvements in energy efficiency. The GrAx3 optimization can simplify the computation by ensuring that the aggregated neighborhood features are equal for the majority of cases, which further streamlines the process and minimizes unnecessary complexity. This hardware-friendly approach can enhance the performance of GNNs, particularly in resource-constrained environments where low latency and high energy efficiency are crucial.

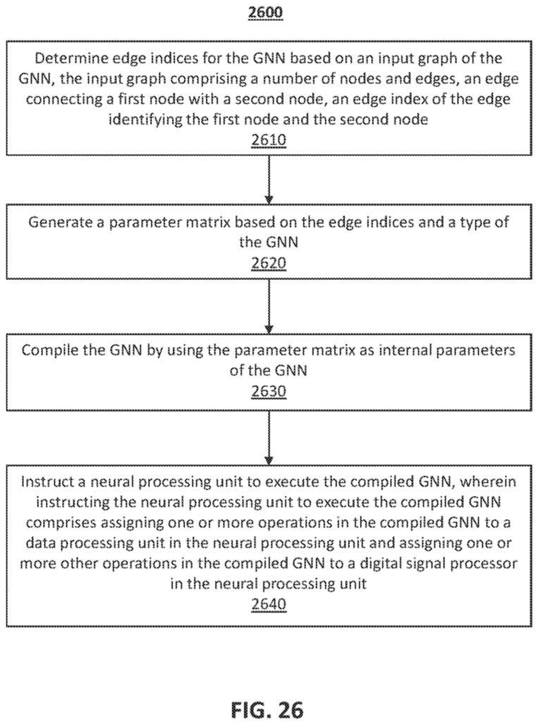

FIG. 26 is a flowchart of a method 2600 of GNN execution, in accordance with various embodiments. The method 2600 may be performed by the DNN module 110 in FIG. 1. Although the method 2600 is described with reference to the flowchart illustrated in FIG. 26, many other methods for GNN execution may alternatively be used. For example, the order of execution of the steps in FIG. 26 may be changed. As another example, some of the steps may be changed, eliminated, or combined.

The DNN module 110 determines 2610 edge indices for the GNN based on an input graph of the GNN. The input graph comprises a number of nodes and edges. An edge connects a first node with a second node. An edge index of the edge identifies the first node and the second node.

The DNN module 110 generates 2620 a parameter matrix (e.g., norm matrix, attention mask, or sampled adjacency matrix) based on the edge indices and a type of the GNN. In some embodiments, the DNN module 110 generates an initial parameter matrix based on the number of nodes in the input graph. The DNN module 110 predetermines a number of additional nodes to be added to the input graph during execution of the compiled GNN. The DNN module 110 generates the parameter matrix by padding the initial parameter matrix based on the number of additional nodes to be added. In some embodiments, the DNN module 110 determines degrees of the number of nodes based on the input graph. A degree of a node indicates a number immediate neighbors of the node in the input graph. In some embodiments, the DNN module 110 generates the parameter matrix based on the degrees of the number of nodes.

In some embodiments, the DNN module 110 determines whether the parameter matrix has diagonal symmetry. In response to determining that the parameter matrix has diagonal symmetry, the DNN module 110 stores a subset of the parameter matrix in a memory accessible to the NPUs. The DNN module 110 bypasses storing another part of the parameter matrix in the memory.

The DNN module 110 compiles 2630 the GNN by using the parameter matrix as internal parameters of the GNN. In some embodiments, the DNN module 110 identifies an operation in the GNN that is to be performed by the DSP. The DNN module 110 converts the operation to an elementwise operation. The DNN module 110 assigns the elementwise operation to the DPU.

In some embodiments, the DNN module 110 converts operations for computing attention scores to one or more operations by the data processing unit. The one or more operations are to be performed by the DPU. A total number of the operations for computing the attention scores is greater than a total number of the one or more operations for approximating attention scores.

The DNN module 110 instructs 2640 an NPU to execute the compiled GNN. The DNN module 110 instructs the NPU to execute the compiled GNN by assigning one or more operations in the compiled GNN to the DPU and assigning one or more other operations in the compiled GNN to the DSP.

In some embodiments, the DPU is to perform a matrix multiplication or an elementwise addition on the parameter matrix. In some embodiments, the DNN module 110 generates a sparsity map for the parameter matrix, the sparsity map indicating positions of one or more zeros in the parameter matrix. The DPU is to bypass, based on the sparsity map, one or more multiply-accumulate operations in a matrix multiplication operation performed on the parameter matrix.

In some embodiments, the DPU is to perform a first operation in the compiled GNN. The DSP is to perform a second operation in the compiled GNN using data computed by the DPU by performing the first operation. A part of the first operation and a part of the second operation are performed at the same time.

In some embodiments, the DNN module 110 generates an embedding matrix representing embeddings of the number of nodes in the input graph. One or more values in the embedding matrix have a floating-point data type. The DNN module 110 quantizes the embedding matrix by converting the floating-point data type to an integer data type. The DNN module 110 compiles the GNN further based on the quantized embedding matrix. The quantized embedding matrix is to be transmitted through an integer data path in the NPUs.

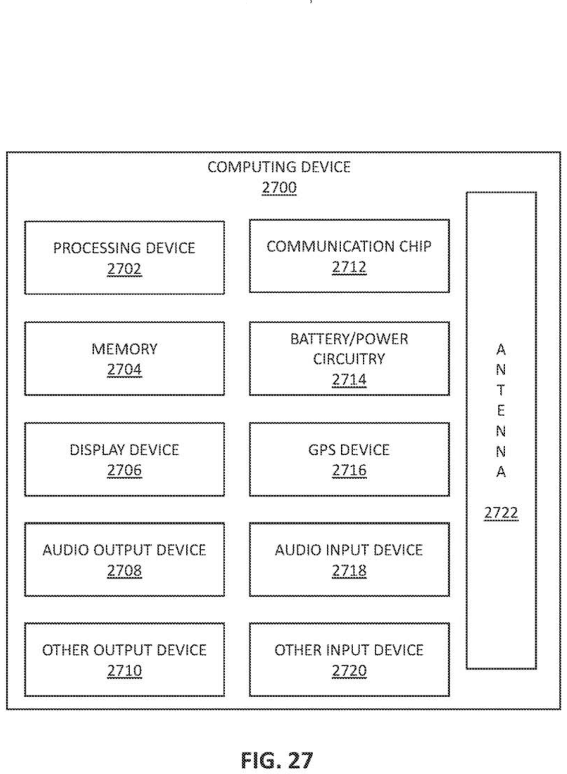

FIG. 27 is a block diagram of an example computing device 2700, in accordance with various embodiments. In some embodiments, the computing device 2700 can be used as at least part of the AI system 100 in FIG. 1. A number of components are illustrated in FIG. 27 as included in the computing device 2700, but any one or more of these components may be omitted or duplicated, as suitable for the application. In some embodiments, some or all of the components included in the computing device 2700 may be attached to one or more motherboards. In some embodiments, some or all of these components are fabricated onto a single system on a chip (SoC) die. Additionally, in various embodiments, the computing device 2700 may not include one or more of the components illustrated in FIG. 27, but the computing device 2700 may include interface circuitry for coupling to the one or more components. For example, the computing device 2700 may not include a display device 2706, but may include display device interface circuitry (e.g., a connector and driver circuitry) to which a display device 2706 may be coupled. In another set of examples, the computing device 2700 may not include an audio input device 2718 or an audio output device 2708 but may include audio input or output device interface circuitry to which an audio input device 2718 or audio output device 2708 may be coupled.

The computing device 2700 may include a processing device 2702 (e.g., one or more processing devices). The processing device 2702 processes electronic data from registers and/or memory to transform that electronic data into other electronic data that may be stored in registers and/or memory. The computing device 2700 may include a memory 2704, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 2704 may include memory that shares a die with the processing device 2702. In some embodiments, the memory 2704 includes one or more non-transitory computer-readable media storing instructions executable to perform operations for executing GNNs (e.g., the method 2600 described in conjunction with FIG. 26) or some operations performed by one or more components of the AI system 100. The instructions stored in the one or more non-transitory computer-readable media may be executed by the processing device 2702.

In some embodiments, the computing device 2700 may include a communication chip 2712 (e.g., one or more communication chips). For example, the communication chip 2712 may be configured for managing wireless communications for the transfer of data to and from the computing device 2700. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 2712 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 2712 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 2712 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 2712 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 2712 may operate in accordance with other wireless protocols in other embodiments. The computing device 2700 may include an antenna 2722 to facilitate wireless communications and/or to receive other wireless communications (such as AM or FM radio transmissions).

In some embodiments, the communication chip 2712 may manage wired communications, such as electrical, optical, or any other suitable communication protocols (e.g., the Ethernet). As noted above, the communication chip 2712 may include multiple communication chips. For instance, a first communication chip 2712 may be dedicated to shorter-range wireless communications such as Wi-Fi or Bluetooth, and a second communication chip 2712 may be dedicated to longer-range wireless communications such as global positioning system (GPS), EDGE, GPRS, CDMA, WiMAX, LTE, EV-DO, or others. In some embodiments, a first communication chip 2712 may be dedicated to wireless communications, and a second communication chip 2712 may be dedicated to wired communications.

The computing device 2700 may include battery/power circuitry 2714. The battery/power circuitry 2714 may include one or more energy storage devices (e.g., batteries or capacitors) and/or circuitry for coupling components of the computing device 2700 to an energy source separate from the computing device 2700 (e.g., AC line power).

The computing device 2700 may include a display device 2706 (or corresponding interface circuitry, as discussed above). The display device 2706 may include any visual indicators, such as a heads-up display, a computer monitor, a projector, a touchscreen display, a liquid crystal display (LCD), a light-emitting diode display, or a flat panel display, for example.

The computing device 2700 may include an audio output device 2708 (or corresponding interface circuitry, as discussed above). The audio output device 2708 may include any device that generates an audible indicator, such as speakers, headsets, or earbuds, for example.

The computing device 2700 may include an audio input device 2718 (or corresponding interface circuitry, as discussed above). The audio input device 2718 may include any device that generates a signal representative of a sound, such as microphones, microphone arrays, or digital instruments (e.g., instruments having a musical instrument digital interface (MIDI) output).

The computing device 2700 may include a GPS device 2716 (or corresponding interface circuitry, as discussed above). The GPS device 2716 may be in communication with a satellite-based system and may receive a location of the computing device 2700, as known in the art.

The computing device 2700 may include another output device 2710 (or corresponding interface circuitry, as discussed above). Examples of the other output device 2710 may include an audio codec, a video codec, a printer, a wired or wireless transmitter for providing information to other devices, or an additional storage device.

The computing device 2700 may include another input device 2720 (or corresponding interface circuitry, as discussed above). Examples of the other input device 2720 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 2700 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 2700 may be any other electronic device that processes data.

The following paragraphs provide various examples of the embodiments disclosed herein.

Example 1 provides a method of executing a GNN, including determining edge indices for the GNN based on an input graph of the GNN, the input graph including a number of nodes and edges, an edge connecting a first node with a second node, an edge index of the edge identifying the first node and the second node; generating a parameter matrix based on the edge indices and a type of the GNN; compiling the GNN by using the parameter matrix as internal parameters of the GNN; and instructing a NPU to execute the compiled GNN, wherein instructing the NPU to execute the compiled GNN comprises assigning one or more operations in the compiled GNN to a DPU in the NPU and assigning one or more other operations in the compiled GNN to a DSP in the NPU.

Example 2 provides the method of example 1, in which the DPU is to perform a matrix multiplication or an elementwise addition on the parameter matrix.

Example 3 provides the method of example 1 or 2, in which generating the parameter matrix includes generating an initial parameter matrix based on the number of nodes in the input graph; predetermining a number of additional nodes to be added to the input graph during execution of the compiled GNN; and generating the parameter matrix by padding the initial parameter matrix based on the number of additional nodes to be added.

Example 4 provides the method of any one of examples 1-3, further including generating a sparsity map for the parameter matrix, the sparsity map indicating positions of one or more zeros in the parameter matrix, in which the DPU is to bypass, based on the sparsity map, one or more multiply-accumulate operations in a matrix multiplication operation performed on the parameter matrix.

Example 5 provides the method of any one of examples 1-4, in which compiling the GNN includes identifying an operation in the GNN that is to be performed by the DSP; converting the operation to an elementwise operation; and assigning the elementwise operation to the DPU.

Example 6 provides the method of any one of examples 1-5, in which compiling the GNN includes converting operations for computing attention scores to one or more operations by the data processing unit; approximating attention scores by performing the converted operations, in which a total number of the operations for computing the attention scores is greater than a total number of the one or more operations for approximating attention scores.

Example 7 provides the method of any one of examples 1-6, in which the data processing unit is to perform a first operation in the compiled GNN, in which the digital signal processor is to perform a second operation in the compiled GNN using data computed by the data processing unit, in which a part of the first operation by the data processing unit and a part of the second operation by the digital signal processor are performed in parallel.

Example 8 provides the method of any one of examples 1-7, further including generating an embedding matrix representing embeddings of the number of nodes in the input graph, one or more values in the embedding matrix having a floating-point data type; and quantizing the embedding matrix by converting the floating-point data type to an integer data type, in which compiling the GNN includes compiling the GNN further based on the quantized embedding matrix, in which the quantized embedding matrix is to be transmitted through an integer data path in the NPUs.

Example 9 provides the method of any one of examples 1-8, in which generating the parameter matrix includes determining degrees of the number of nodes based on the input graph, a degree of a node indicating a number immediate neighbors of the node in the input graph; and generating the parameter matrix based on the degrees of the number of nodes.

Example 10 provides the method of any one of examples 1-9, further including determining whether the parameter matrix has diagonal symmetry; and in response to determining that the parameter matrix has diagonal symmetry, storing a subset of the parameter matrix in a memory accessible to the NPUs, and bypassing storing another part of the parameter matrix in the memory.

Example 11 provides one or more non-transitory computer-readable media storing instructions executable to perform operations of executing a GNN, the operations including determining edge indices for the GNN based on an input graph of the GNN, the input graph including a number of nodes and edges, an edge connecting a first node with a second node, an edge index of the edge identifying the first node and the second node; generating a parameter matrix based on the edge indices and a type of the GNN; compiling the GNN by using the parameter matrix as internal parameters of the GNN; and instructing a NPU to execute the compiled GNN, wherein instructing the NPU to execute the compiled GNN comprises assigning one or more operations in the compiled GNN to a DPU in the NPU and assigning one or more other operations in the compiled GNN to a DSP in the NPU.

Example 12 provides the one or more non-transitory computer-readable media of example 11, in which the DPU is to perform a matrix multiplication or an elementwise addition on the parameter matrix.

Example 13 provides the one or more non-transitory computer-readable media of example 11 or 12, in which generating the parameter matrix includes generating an initial parameter matrix based on the number of nodes in the input graph; predetermining a number of additional nodes to be added to the input graph during execution of the compiled GNN; and generating the parameter matrix by padding the initial parameter matrix based on the number of additional nodes to be added.

Example 14 provides the one or more non-transitory computer-readable media of any one of examples 11-13, in which the operations further include generating a sparsity map for the parameter matrix, the sparsity map indicating positions of one or more zeros in the parameter matrix, in which the DPU is to bypass, based on the sparsity map, one or more multiply-accumulate operations in a matrix multiplication operation performed on the parameter matrix.

Example 15 provides the one or more non-transitory computer-readable media of any one of examples 11-14, in which compiling the GNN includes identifying an operation in the GNN that is to be performed by the DSP; converting the operation to an elementwise operation; and assigning the elementwise operation to the DPU.

Example 16 provides the one or more non-transitory computer-readable media of any one of examples 11-15, in which compiling the GNN includes converting operations for computing attention scores to one or more operations by the data processing unit; approximating attention scores by performing the converted operations, in which a total number of the operations for computing the attention scores is greater than a total number of the one or more operations for approximating attention scores.

Example 17 provides the one or more non-transitory computer-readable media of any one of examples 11-16, in which the data processing unit is to perform a first operation in the compiled GNN, in which the digital signal processor is to perform a second operation in the compiled GNN using data computed by the data processing unit, in which a part of the first operation by the data processing unit and a part of the second operation by the digital signal processor are performed in parallel.

Example 18 provides the one or more non-transitory computer-readable media of any one of examples 11-17, in which the operations further include generating an embedding matrix representing embeddings of the number of nodes in the input graph, one or more values in the embedding matrix having a floating-point data type; and quantizing the embedding matrix by converting the floating-point data type to an integer data type, in which compiling the GNN includes compiling the GNN further based on the quantized embedding matrix, in which the quantized embedding matrix is to be transmitted through an integer data path in the NPUs.

Example 19 provides the one or more non-transitory computer-readable media of any one of examples 11-18, in which generating the parameter matrix includes determining degrees of the number of nodes based on the input graph, a degree of a node indicating a number immediate neighbors of the node in the input graph; and generating the parameter matrix based on the degrees of the number of nodes.

Example 20 provides the one or more non-transitory computer-readable media of any one of examples 11-19, in which the operations further include determining whether the parameter matrix has diagonal symmetry; and in response to determining that the parameter matrix has diagonal symmetry, storing a subset of the parameter matrix in a memory accessible to the NPUs, and bypassing storing another part of the parameter matrix in the memory.

Example 21 provides an apparatus including a computer processor for executing computer program instructions; and a non-transitory computer-readable memory storing computer program instructions executable by the computer processor to perform operations for executing a GNN, the operations including determining edge indices for the GNN based on an input graph of the GNN, the input graph including a number of nodes and edges, an edge connecting a first node with a second node, an edge index of the edge identifying the first node and the second node, generating a parameter matrix based on the edge indices and a type of the GNN, compiling the GNN by using the parameter matrix as internal parameters of the GNN, and instructing a NPU to execute the compiled GNN, wherein instructing the NPU to execute the compiled GNN comprises assigning one or more operations in the compiled GNN to a DPU in the NPU and assigning one or more other operations in the compiled GNN to a DSP in the NPU.

Example 22 provides the apparatus of example 21, in which the DPU is to perform a matrix multiplication or an elementwise addition on the parameter matrix.

Example 23 provides the apparatus of example 21 or 22, in which generating the parameter matrix includes generating an initial parameter matrix based on the number of nodes in the input graph; predetermining a number of additional nodes to be added to the input graph during execution of the compiled GNN; and generating the parameter matrix by padding the initial parameter matrix based on the number of additional nodes to be added.

Example 24 provides the apparatus of any one of examples 21-23, in which the operations further include generating a sparsity map for the parameter matrix, the sparsity map indicating positions of one or more zeros in the parameter matrix, in which the DPU is to bypass, based on the sparsity map, one or more multiply-accumulate operations in a matrix multiplication operation performed on the parameter matrix.

Example 25 provides the apparatus of any one of examples 21-24, in which compiling the GNN includes identifying an operation in the GNN that is to be performed by the DSP; converting the operation to an elementwise operation; and assigning the elementwise operation to the DPU.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art can recognize. These modifications may be made to the disclosure in light of the above detailed description.

**Claims**

1. A method of executing a graph neural network (GNN), comprising:

   determining edge indices for the GNN based on an input graph of the GNN, the input graph comprising a number of nodes and edges, an edge connecting a first node with a second node, an edge index of the edge identifying the first node and the second node;
   generating a parameter matrix based on the edge indices and a type of the GNN;
   compiling the GNN by using the parameter matrix as internal parameters of the GNN; and
   instructing a neural processing unit to execute the compiled GNN, wherein instructing the neural processing unit to execute the compiled GNN comprises assigning one or more operations in the compiled GNN to a data processing unit in the neural processing unit and assigning one or more other operations in the compiled GNN to a digital signal processor in the neural processing unit.

2. The method of claim 1, wherein the data processing unit is to perform a matrix multiplication or an elementwise addition on the parameter matrix.

3. The method of claim 1 or 2, wherein generating the parameter matrix comprises:

   generating an initial parameter matrix based on the number of nodes in the input graph;
   predetermining a number of additional nodes to be added to the input graph during execution of the compiled GNN; and
   generating the parameter matrix by padding the initial parameter matrix based on the number of additional nodes to be added.

4. The method of any one of claims 1-3, further comprising:

   generating a sparsity map for the parameter matrix, the sparsity map indicating positions of one or more zeros in the parameter matrix, wherein the data processing unit is to bypass, based on the sparsity map, one or more multiply-accumulate operations in a matrix multiplication operation performed on the parameter matrix; or
   determining whether the parameter matrix has diagonal symmetry, and in response to determining that the parameter matrix has diagonal symmetry: storing a part of the parameter matrix in a memory accessible to the neural processing unit, and bypassing storing another part of the parameter matrix in the memory.

5. The method of any one of claims 1-4, wherein compiling the GNN comprises:

   identifying an operation in the GNN that is to be performed by the digital signal processor, converting the operation to an elementwise operation, and assigning the elementwise operation to the data processing unit; or
   converting operations for computing attention scores to one or more operations by the data processing unit, and approximating attention scores by performing the converted operations, wherein a total number of the operations for computing the attention scores is greater than a total number of the one or more operations for approximating attention scores.

6. The method of any one of claims 1-5, wherein the data processing unit is to perform a first operation in the compiled GNN, wherein the digital signal processor is to perform a second operation in the compiled GNN using data computed by the data processing unit, wherein a part of the first operation by the data processing unit and a part of the second operation by the digital signal processor are performed in parallel.

7. The method of any one of claims 1-6, further comprising:

   generating an embedding matrix representing embeddings of the number of nodes in the input graph, one or more values in the embedding matrix having a floating-point data type; and quantizing the embedding matrix by converting the floating-point data type to an integer data type,

wherein compiling the GNN further comprises compiling the GNN based on the quantized embedding matrix, wherein the quantized embedding matrix is to be transmitted through an integer data path in the neural processing unit.

8. The method of any one of claims 1-7, wherein generating the parameter matrix comprises:

determining degrees of the number of nodes based on the input graph, a degree of a node indicating a number immediate neighbors of the node in the input graph; and generating the parameter matrix based on the degrees of the number of nodes.

9. One or more non-transitory computer-readable media storing instructions executable to perform operations of executing a graph neural network (GNN), the operations comprising:

determining edge indices for the GNN based on an input graph of the GNN, the input graph comprising a number of nodes and edges, an edge connecting a first node with a second node, an edge index of the edge identifying the first node and the second node; generating a parameter matrix based on the edge indices and a type of the GNN; compiling the GNN by using the parameter matrix as internal parameters of the GNN; and instructing a neural processing unit to execute the compiled GNN, wherein instructing the neural processing unit to execute the compiled GNN comprises assigning one or more operations in the compiled GNN to a data processing unit in the neural processing unit and assigning one or more other operations in the compiled GNN to a digital signal processor in the neural processing unit.

10. The one or more non-transitory computer-readable media of claim 9, wherein the data processing unit is to perform a matrix multiplication or an elementwise addition on the parameter matrix.

11. The one or more non-transitory computer-readable media of claim 9 or 10, wherein generating the parameter matrix comprises:

generating an initial parameter matrix based on the number of nodes in the input graph;

predetermining a number of additional nodes to be added to the input graph during execution of the compiled GNN; and generating the parameter matrix by padding the initial parameter matrix based on the number of additional nodes to be added.

12. The one or more non-transitory computer-readable media of any one of claims 9-11, wherein the operations further comprise:

generating a sparsity map for the parameter matrix, the sparsity map indicating positions of one or more zeros in the parameter matrix, wherein the data processing unit is to bypass, based on the sparsity map, one or more multiply-accumulate operations in a matrix multiplication operation performed on the parameter matrix.

13. The one or more non-transitory computer-readable media of any one of claims 9-12, wherein compiling the GNN comprises:

identifying an operation in the GNN that is to be performed by the digital signal processor, converting the operation to an elementwise operation, and assigning the elementwise operation to the data processing unit; or converting operations for computing attention scores to one or more operations by the data processing unit, and approximating attention scores by performing the converted operations, wherein a total number of the operations for computing the attention scores is greater than a total number of the one or more operations for approximating attention scores.

14. An apparatus comprising:

a computer processor for executing computer program instructions; and a non-transitory computer-readable memory storing computer program instructions executable by the computer processor to perform operations for executing a graph neural network (GNN), the operations comprising:

determining edge indices for the GNN based on an input graph of the GNN, the input graph comprising a number of nodes and edges, an edge connecting a first node with a second node, an edge index of the edge identifying the first node and the second node, generating a parameter matrix based on the edge indices and a type of the GNN, compiling the GNN by using the parameter matrix as internal parameters of the GNN,

and

instructing a neural processing unit to execute the compiled GNN, wherein instructing the neural processing unit to execute the compiled GNN comprises assigning one or more operations in the compiled GNN to a data processing unit in the neural processing unit and assigning one or more other operations in the compiled GNN to a digital signal processor in the neural processing unit.

15. The apparatus of claim 14, wherein generating the parameter matrix comprises:

generating an initial parameter matrix based on the number of nodes in the input graph;
predetermining a number of additional nodes to be added to the input graph during execution of the compiled GNN; and
generating the parameter matrix by padding the initial parameter matrix based on the number of additional nodes to be added.

**FIG. 1**

34

200

FIG. 2

300
301
302
303
310A 310B 310C 310D
320B 320B
330

FIG. 3

FIG. 4

FIG. 5

FIG. 6

GNN 600

Input Graph 601

Node Embedding Layer 610

Global Embedding Layer 620

Prediction 602

Decoding Layer 670

Neighbor Sub-graph Layer 630

Aggregation Layer 640

Combination Layer 650

Node Update Layer 660

FIG. 7

Pretrained GNN Model 801

GNN Partitioning 810

CPU Processing 802

NPU Computation 803

Apply model optimizations 820

Convert to IR 840

model.xml    804    model.bin

NPU compiler 850

model.blob 805

NPU 800

Main Memory 860

**FIG. 8**

**FIG. 9**

FIG. 10A

**FIG. 10B**

FIG. 10C

FIG. 11

FIG. 12

FIG. 13

FIG. 14

EP 4 749 455 A1

Sampled Adjacency Matrix 1502

Feature Matrix 1501

CPU 1515

Unsqueeze Adjacency Matrix 1540

Elementwise Multiplication 1550

Maxpool1D 1560

DPU 1535

1505

1504

Element[j] == 0? 1510

Yes

No

1520

Feature[j] =-∞ 1420

Feature[j] =x[j] 1420

Reduce Max 1530

DSP 1525

1503

1504

FIG. 15

FIG. 16

FIG. 17

FIG. 18

FIG. 19

FIG. 20

EP 4 749 455 A1

FIG. 21

FIG. 22

EP 4 749 455 A1

Adjacency Matrix 2301

Submatrix 2302

DPU 2350

DSP 2360

Memory 2340

Other logic

DMA Engine 2330

NPU 2320

Main Memory 2310

FIG. 23

EP 4 749 455 A1

Mask
2401

DPU 2400

Elementwise Addition 2450

2406

Softmax 2460

2404

Adjacency Matrix 2401

Elementwise Multiplication 2410

DPU 2400

Elementwise Addition 2420

2405

Softmax 2440

Mask 2402

2403

FIG. 24

**FIG. 25**

2600

Determine edge indices for the GNN based on an input graph of the GNN, the input graph comprising a number of nodes and edges, an edge connecting a first node with a second node, an edge index of the edge identifying the first node and the second node

2610

Generate a parameter matrix based on the edge indices and a type of the GNN

2620

Compile the GNN by using the parameter matrix as internal parameters of the GNN

2630

Instruct a neural processing unit to execute the compiled GNN, wherein instructing the neural processing unit to execute the compiled GNN comprises assigning one or more operations in the compiled GNN to a data processing unit in the neural processing unit and assigning one or more other operations in the compiled GNN to a digital signal processor in the neural processing unit

2640

FIG. 26

FIG. 27

**EUROPEAN SEARCH REPORT**

Application Number

EP 25 20 9748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TANG ENHAO ET AL: "Graph-OPU: A highly flexible FPGA-Based Overlay Processor for Graph Neural Networks", ACM TRANSACTIONS ON RECONFIGURABLE TECHNOLOGY AND SYSTEMS, ACMPUB27, NEW YORK, NY, 2 September 2024 (2024-09-02), XP059525944, DOI: 10.1145/3691636 * abstract; figures 1, 6, 8, 10; table 1 * * Sections 2.1, 4, 5 * | 1-15 | INV. G06F9/50 G06N3/042 G06N3/063 G06N3/0495 |
| A | US 2022/343145 A1 (XUE FEI [US] ET AL) 27 October 2022 (2022-10-27) * abstract; figures 2B, 4 * * paragraphs [0037] - [0044], [0054] - [0060], [0070] - [0078] * | 1-15 | |

TECHNICAL FIELDS
SEARCHED      (IPC)

G06F
G06N

The present search report has been drawn up for all claims

| Place of search | Date of completion of the search | Examiner |
|---|---|---|
| The Hague | 10 February 2026 | Houtgast, Ernst |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 9748

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2026

| Patent document cited in search report | Publication date | Patent family member(s) | | Publication date |
|---|---|---|---|---|
| US 2022343145 A1 | 27-10-2022 | CN | 117203628 A | 08-12-2023 |
| | | US | 2022343145 A1 | 27-10-2022 |
| | | WO | 2022223051 A1 | 27-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63723298